# EUROPEAN PATENT APPLICATION

(11) **EP 4 593 433 A2**
(43) Date of publication of application: **30.07.2025**
(21) Application number: 25183073.3
(22) Date of filing: 18.06.2021
(51) Int. Cl.: H04W 8/00

(54) **WIRELESS COMMUNICATION METHOD AND DEVICE**

(30) Priority: 19.03.2021 WO PCT/CN2021/081860
(62) Divisional of application: 21931044.8
(71) Applicant: GUANGDONG OPPO MOBILE TELECOMMUNICATIONS CORP., LTD., Dongguan, Guangdong 523860 (CN)
(72) Inventor: ZHOU, Pei, Dongguan, 523860 (CN); HUANG, Lei, 049483 Singapore (SG)
(74) Representative: Mewburn Ellis LLP

(57) **Abstract**

The present disclosure provides a wireless communication method and device (500, 1000), capable of expediting a sensing discovery and set process. The method includes: receiving, by a third device, first information transmitted by a first device on a first frequency band, the first information including sensing capability information of a target device on at least one frequency band.

## Description

### TECHNICAL FIELD

The embodiments of the present disclosure relate to communication technology, and more particularly, to a wireless communication method and device.

### BACKGROUND

Wireless Fidelity (WiFi) Sensing is a function enhancement of the 802.11 protocol proposed by the 802.11bf standard. It measures and senses a surrounding environment using wireless signals, so as to provide many functions such as detection of whether there are people invading, moving or falling in an indoor environment, gesture recognition, spatial three-dimensional image creation, and the like.

The 802.11bf supports Wi-Fi Sensing on low and high frequencies. For devices that support low frequency bands, WiFi Sensing capability discovery and set need to be performed on low frequency bands. For devices that only support high frequency bands, WiFi Sensing capability discovery and set need to be performed on high frequency bands. For devices that support both low frequency and high frequency bands, WiFi Sensing capability discovery and set are performed on the low frequency band and the high frequency band separately, and the signaling overhead is high. How to improve the performance of the WiFi Sensing capability discovery and set is a problem to be solved.

### SUMMARY

The present disclosure provides a wireless communication method and device, capable of expediting a sensing discovery and set process and improving the performance of sensing capability discovery and set.

In a first aspect, a wireless communication method is provided. The method includes: transmitting, by a first device, first information on a first frequency band, the first information including sensing capability information of a target device on at least one frequency band.

In a second aspect, a wireless communication method is provided. The method includes: receiving, by a third device, first information transmitted by a first device on a first frequency band, the first information comprising sensing capability information of a target device on at least one frequency band.

In a third aspect, a wireless communication method is provided. The method includes: transmitting, by a sensing initiator, second information to a sensing responder, the second information being used to establish at least one sensing session.

According to a fourth aspect, a wireless communication method is provided. The method includes: receiving, by a sensing responder, second information transmitted by a sensing initiator, the second information being used to establish at least one sensing session.

In a fifth aspect, a wireless communication device is provided. The wireless communication device is configured to perform the method according to the above first aspect or any implementation thereof. In particular, the device includes one or more functional modules configured to perform the method according to the above first aspect or any implementation thereof.

In a sixth aspect, a wireless communication device is provided. The wireless communication device is configured to perform the method according to the above second aspect or any implementation thereof. In particular, the device includes one or more functional modules configured to perform the method according to the above second aspect or any implementation thereof.

In a seventh aspect, a sensing initiator is provided. The sensing initiator is configured to perform the method according to the above third aspect or any implementation thereof. In particular, the sensing initiator includes one or more functional modules configured to perform the method according to the above third aspect or any implementation thereof.

In an eighth aspect, a sensing responder is provided. The sensing responder is configured to perform the method according to the above fourth aspect or any implementation thereof. In particular, the sensing responder includes one or more functional modules configured to perform the method according to the above fourth aspect or any implementation thereof.

In a ninth aspect, a communication device is provided. The wireless communication device includes a processor and a memory. The memory is configured to store a computer program, and the processor is configured to invoke and execute the computer program stored in the memory to perform the method according to any of the above first to fourth aspects or any implementation thereof.

In a tenth aspect, a chip is provided. The chip is configured to perform the method according to any of the above first to fourth aspects or any implementation thereof. In particular, the chip includes a processor configured to invoke and execute a computer program from a memory, to enable a device provided with the apparatus to perform the method according to any of the above first to fourth aspects or any implementation thereof.

In an eleventh aspect, a computer-readable storage medium is provided. The computer-readable storage medium is configured to store a computer program that enables a computer to perform the method according to any of the above first to fourth aspects or any implementation thereof.

In a twelfth aspect, a computer program product is provided. The computer program product includes computer program instructions that cause a computer to perform the method according to any of the above first to fourth aspects or any implementation thereof.

In a thirteenth aspect, a computer program is provided. The computer program, when executed on a computer, causes the computer to perform the method according to any of the above first to fourth aspects or any implementation thereof.

With the above technical solutions, when the first device performs sensing capability discovery on a first frequency band, it carries the sensing capability information of the first device on multiple frequency bands, such that devices can complete sensing capability discovery on the multiple frequency bands on one frequency band, which reduces the overhead of sensing capability discovery, expedites the process of sensing capability discovery, and improves the performance of sensing capability discovery.

### BRIEF DESCRIPTION OF DRAWINGS

FIG. 1 is a schematic diagram showing an architecture of a communication system according to an embodiment of the present disclosure.
FIG. 2 is a schematic diagram showing a Wi-Fi sensing process.
FIG. 3 is a schematic diagram showing multi-band Wi-Fi sensing.
FIG. 4 is a schematic diagram showing multi-AP Wi-Fi sensing.
FIGS. 5-7 are schematic interaction diagrams each illustrating a wireless communication method according to an embodiment of the present disclosure.
FIGS. 8-11 are schematic diagrams showing typical formats of Sensing Capabilities element carrying sensing capability information of a first device.
FIG. 12 is a schematic diagram showing a format of an Extended Capabilities element carrying sensing capability information of a first device.
FIG. 13 is a schematic diagram showing a format of an Extended Capabilities element carrying first capability information of a first device.
FIG. 14 is a schematic interaction diagram showing an AP carrying sensing capability information of sounding APs.
FIG. 15 is a schematic diagram showing a format of a Sensing Capabilities element carrying sensing capability information of sounding APs.
FIG. 16 is a schematic interaction diagram showing a transmitted BSSID of an AP carrying sensing capability information of a nontransmitted BSSID of an AP.
FIGS. 17-18 are schematic interaction diagrams each showing a format of a Sensing Capabilities element carrying sensing capability information of a nontransmitted BSSID.
FIGS. 19-25 are schematic interaction diagrams each illustrating a wireless communication method according to another embodiment of the present disclosure.
FIG. 26 is a schematic diagram showing an exemplary scenario of a sensing session.
FIGS. 27-28 are schematic diagrams each showing an exemplary frame structure of a sensing request frame according to an embodiment of the present disclosure.
FIG. 29 is a schematic diagram showing an exemplary frame structure of a sensing response frame according to an embodiment of the present disclosure.
FIGS. 30-31 are schematic diagrams each showing an exemplary frame structure of a sensing confirm frame according to an embodiment of the present disclosure.
FIG. 32 is a schematic block diagram of a wireless communication device according to an embodiment of the present disclosure.
FIG. 33 is a schematic block diagram of a wireless communication device according to another embodiment of the present disclosure.
FIG. 34 is a schematic block diagram of a sensing initiator according to an embodiment of the present disclosure.
FIG. 35 is a schematic block diagram of a sensing responder according to an embodiment of the present disclosure.
FIG. 36 is a schematic block diagram of a wireless communication device according to an embodiment of the present disclosure.
FIG. 37 is a schematic block diagram of a chip according to an embodiment of the present disclosure.
FIG. 38 is a schematic block diagram of a communication system according to an embodiment of the present disclosure.

### DESCRIPTION OF EMBODIMENTS

The technical solutions in the embodiments of the present disclosure will be described below with reference to the figure in the embodiments of the present disclosure. Obviously, the described embodiments are only some embodiments, rather than all embodiments, of the present disclosure. All other embodiments obtained by those skilled in the art based on the embodiments in the present disclosure without inventive efforts are to be encompassed by the scope of the present disclosure.

The solutions according to the embodiments of the present disclosure can be applied to various communication systems, including for example: Wireless Local Area Networks (WLAN), Wireless Fidelity (WiFi), or other communication systems.

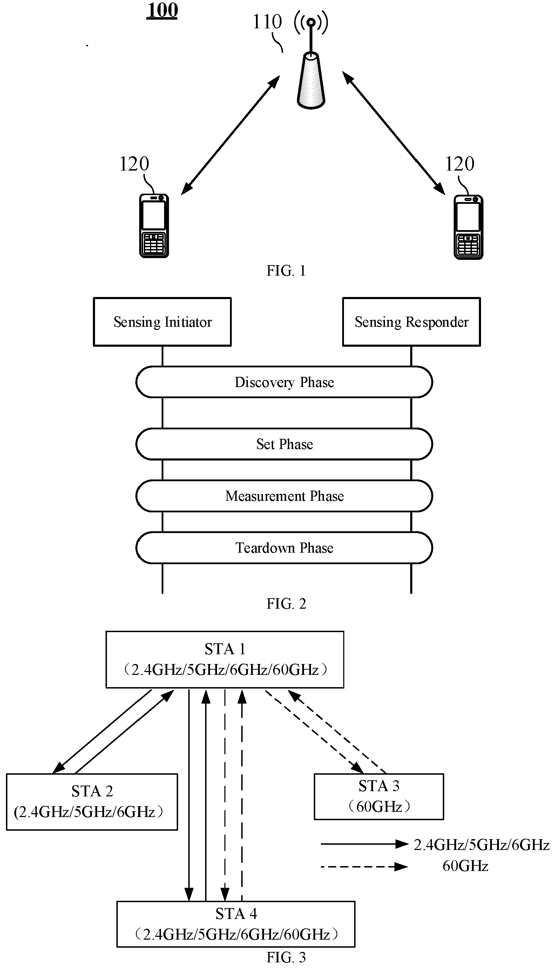

Exemplarily, a communication system 100 in which an embodiment of the present disclosure is applied is shown in FIG. 1. The communication system 100 may include an Access Point (AP) 110 and a STATION (STA) 120 accessing a network via the AP 110.

In the embodiments of the present disclosure, the STA may be a mobile phone, a tablet computer (Pad), a computer with a wireless transceiver function, a Virtual Reality (VR) device, an Augmented Reality (AR) device, a wireless device in industrial control, a wireless device in self-driving, a wireless device in remote medical, a wireless device in smart grid, a wireless device in transportation safety, a wireless device in smart city, or a wireless device in smart home.

FIG. 1 exemplarily shows one AP and two STAs. Optionally, the communication system 100 may include multiple APs and other numbers of STAs. The embodiment of the present disclosure is not limited to this.

It can be appreciated that, in the embodiments of the present disclosure, a device having a communication function in a network/system may be referred to as a communication device. Taking the communication system 100 shown in FIG. 1 as an example, the communication devices may include the AP 110 and the STA 120 with communication functions. The AP 110 and the STA 120 may be the specific devices described above, and details thereof will be omitted here. The communication devices may also include other devices in the communication system 100, e.g., other network entities such as a network controller, a gateway, etc., and the embodiment of the present disclosure is not limited to any of these examples.

In addition, the terms "system" and "network" may often be used interchangeably herein. The term "and/or" as used herein only represents a relationship between correlated objects, including three relationships. For example, "A and/or B" may mean A only, B only, or both A and B. In addition, the symbol "/" as used herein represents an "or" relationship between the correlated objects preceding and succeeding the symbol.

It can be appreciated that the term "indication" as used in the embodiments of the present disclosure may be a direct indication, an indirect indication, or an association. For example, if A indicates B, it may mean that A directly indicates B, e.g., B can be obtained from A. Alternatively, it may mean that A indicates B indirectly, e.g., A indicates C and B can be obtained from C. Alternatively, it may mean that there is an association between A and B.

In the description of the embodiments of the present disclosure, the term "corresponding" may mean that there is a direct or indirect correspondence between the two, or may mean that there is an association between the two, or that they are in a relation of indicating and indicated, configuring or configured, or the like.

In the embodiments of the present disclosure, "predefined" may implemented as pre-stored in one or more devices (for example, including an AP and an STA) corresponding codes, tables or other means that can be used to indicate related information, and the present disclosure is not limited to its specific implementation. For example, "predefined" may refer to defined in protocols.

In order to facilitate understanding of the technical solutions of the embodiments of the present disclosure, the technical solutions of the present disclosure will be described in detail below with reference to specific embodiments. The following related technologies as optional solutions may be arbitrarily combined with the technical solutions of the embodiments of the present disclosure, and all these combinations are to be encompassed by the protection scope of the embodiments of the present disclosure. The embodiments of the present disclosure include at least part of the following content.

WiFi Sensing is a function enhancement of the 802.11 protocol proposed by the 802.11bf standard. It measures and senses a surrounding environment using wireless signals, so as to provide many functions such as detection of whether there are people invading, moving or falling in an indoor environment, gesture recognition, spatial three-dimensional image creation, and the like.

The following are several typical application scenarios of WiFi Sensing and related parameters.

### 1. Room Sensing

Low frequency: detecting whether there are people in the room, detecting the number of people in the room, locating active people, and detecting movement of people, etc.

### 2. Gesture Recognition

High frequency: detecting finger movement at short distance (<0.5m), detecting hand movement at middle distance (0.5m~2m), detecting body movement at long distance (2m~7m); recognizing face/body (<1m), etc.

Low Frequency: smart home device control - gesture detection (<3m).

### 3. Health Care

High frequency: sneeze sensing (<10m);
Low frequency: fall detection (<10m); remote diagnosis, such as respiration rate and heart rate diagnosis (<5m), etc.

### 4. Three-dimensional image creation (3D Vision)

High Frequency: sensing and creating a 3D image of environment using multiple STAs.

### 5. In car sensing

High frequency: driver fatigue recognition (<3m);
Low frequency: In-car passenger detection (<5m).

There can be multiple WiFi Sensing roles in WiFi Sensing as follows:
Sensing Initiator: a device that initiates a sensing session and wants to obtain a sensing result.

Sensing Responder: a device that participates in the sensing session other than the Sensing Initiator.

Sensing Transmitter: a device that initiates a sensing illumination signal.

Sensing Receiver: a device that receives a sensing illumination signal.

Sensing processor: a device that processes a sensing measurement result.

In some cases, there may be a plurality of Sensing Types. For example, for a sensing type based on Channel State Information (CSI), i.e., CSI-based Sensing, a sensing measurement result is obtained by processing the CSI of a received sensing illumination signal. In another example, for a reflected wave-based sensing type, i.e., Radar-based Sensing, a sensing measurement result is obtained by processing a reflected wave of a received sensing illumination signal.

FIG. 2 is a schematic diagram showing a Wi-Fi sensing process. As shown in FIG. 2, the Wi-Fi sensing process may include the following phases:

### 1. Capability Discovery

In this phase, a Sensing Initiator and a Sensing Responder exchange Wi-Fi Sensing capability information.

### 2. Set

In the set phase, a Sensing Session is established, roles of Sensing Transmitter and Sensing Receiver in the Sensing Session are indicated, and other sensing session transmission parameters are set.

### 3. Measurement exchange

The Sensing Transmitter in the Sensing Session transmits a sensing illumination signal to the Sensing Receiver in the Sensing Session, and the Sensing Receiver feeds back a measurement result, etc.

### 4. Teardown

The Sensing Session established in the above phase is terminated.

It can be seen from the above application scenarios that the 802.11bf supports WiFi Sensing on high and low frequency bands. For devices that support low frequency bands (for example, 2.4GHz, 5GHz or 6GHz), the Wi-Fi sensing process needs to be performed on the low frequency bands, for devices that support high frequency bands (for example, 60GHz), the Wi-Fi sensing process needs to be performed on the high frequency bands, and for devices that support both low frequency bands and high frequency bands, the Wi-Fi sensing process needs to be performed on both the low frequency bands and the high frequency bands.

As shown in FIG. 3, a device that only supports low frequency bands (such as STA 2) needs to perform the Wi-Fi sensing process on the low frequency band; a device that only supports high frequency bands (such as STA 3) needs to perform the Wi-Fi sensing process on the high frequency band; a device that supports both low frequency bands and high frequency bands (such as STA 4) needs to perform Wi-Fi sensing processes on low frequencies and high frequencies, respectively. Therefore, the Wi-Fi sensing process needs to be optimized.

In addition, in some scenarios, there may be multiple devices (such as multiple APs or multiple Sensing Responders) or multiple Basic Service Sets (i.e., multiple BSSID sets) in Wi-Fi Sensing. In this case, how to discover and configure the sensing capability is also a problem.

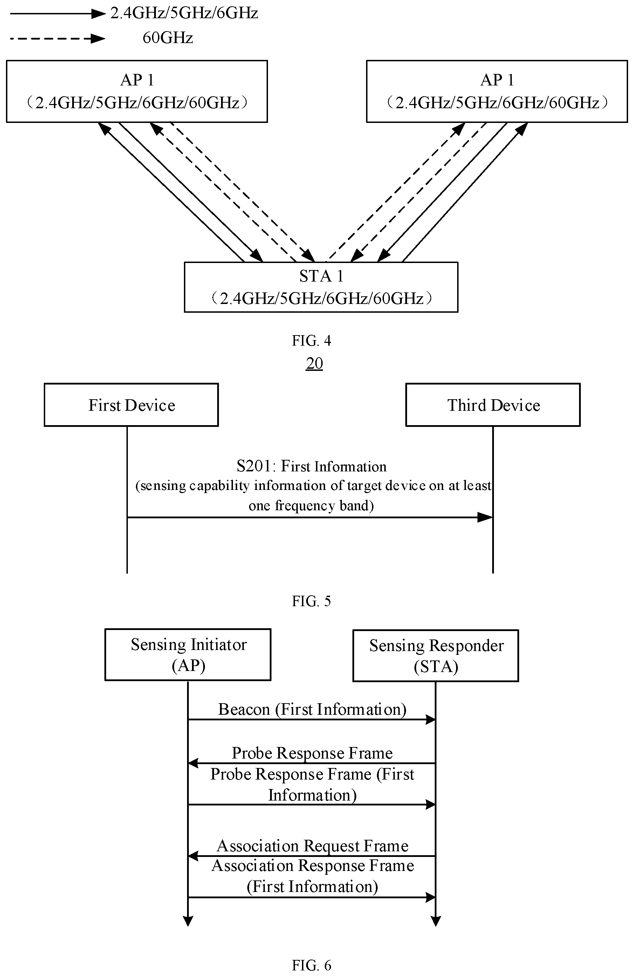

In the scenario shown in FIG. 4, each of a plurality of APs (AP1 and AP2) needs to discover and configure the sensing capability with STA1, and the Wi-Fi sensing process needs to be optimized.

FIG. 5 is a schematic interaction diagram illustrating a wireless communication method 20 according to an embodiment of the present disclosure. As shown in FIG. 5, the method 20 may include at least part of the following content.

At S201, a first device transmits first information on a first frequency band, the first information including sensing capability information of a target device on at least one frequency band.

Optionally, in some embodiments, the first device transmitting the first information on the first frequency band may include:
the first device transmitting the first information to at least one third device by means of multicast or unicast on the first frequency band.

In some embodiments, the first device may be an AP or an STA.

In some embodiments, the third device may be an STA or an AP.

In some embodiments, the first device may transmit the first information during a sensing discovery process.

In some embodiments, the first device is a sensing discovery device, that is, a Sensing Initiator.

In some embodiments of the present disclosure, the first information may include sensing capability information of the first device on a plurality of frequency bands.

Therefore, by carrying the sensing capability information of the first device on the plurality of frequency bands on one frequency band, the first device does not need to perform the sensing capability discovery process on each of the plurality of frequency bands. The sensing capability discovery process on the plurality of frequency bands can be completed on one frequency band, which can reduce the signaling overhead of the sensing capability discovery.

In some embodiments, the plurality of frequency bands may include the first frequency band.

In some embodiments, the first frequency band may be a low frequency band, such as 2.4 GHz, or 5 GHz, or 6 GHz, and by transmitting the sensing capability information on the low frequency band, the first device can avoid the problem of time consumption and energy consumption in sensing capability discovery using a directional beam sweeping transmission method on the high frequency band.

It should be understood that the sensing in this embodiment of the present disclosure may include but not limited to Wi-Fi sensing and WLAN sensing.

In some embodiments, the first information may include first capability information, and the first capability information may indicate whether the first device supports sensing, e.g., Wi-Fi sensing. In some embodiments, the sensing capability information of the first device on the plurality of frequency bands may indicate at least one of:
whether the first device has a sensing capability on the plurality of frequency bands, indicated by first indication information;
sensing frequency band information supported by the first device;
sensing role information supported by the first device;
sensing type information supported by the first device;
whether the first device supports sensing between devices of a same type;
whether the first device supports sensing between one device and a plurality of devices;
whether the first device supports sensing between a plurality of devices and a plurality of devices;
whether the first device supports trigger-based sensing; and
whether the first device supports pairwise sensing.

In some embodiments, the sensing role information may include at least one of:
sensing initiator, sensing responder, sensing transmitter, sensing receiver, sensing processor.

In some embodiments, the sensing type information may include at least one of:
sensing based on Channel State Information (CSI) (that is, CSI-based Sensing) and sensing based on reflected waves (that is, Radar-based Sensing).

Here, for the specific description of the above sensing role information and sensing type information, reference can be made to the relevant description above, and details thereof will be omitted here.

In some embodiments, the sensing role information supported by the first device may include a set of sensing role information corresponding to each sensing frequency band supported by the first device.

That is, each sensing frequency band supported by the first device may correspond to same sensing role information.

In some other embodiments, the sensing role information supported by the first device may include sensing role information supported by the first device on each supported sensing frequency band. That is, each sensing frequency band supported by the first device may correspond to independent sensing role information. Optionally, the sensing role supported by the first device on each sensing frequency band may be same or different.

In some embodiments, the sensing type information supported by the first device may include a set of sensing type information corresponding to each sensing frequency band supported by the first device. That is, each sensing frequency band supported by the first device may correspond to same sensing type information.

In some other embodiments, the sensing type information supported by the first device may include sensing type information supported by the first device on each supported sensing frequency band. That is, each sensing frequency band supported by the first device may correspond to independent sensing type information. Optionally, the sensing type supported by the first device on each sensing frequency band may be same or different.

In some other embodiments, the sensing type information supported by the first device may include sensing type information supported by the first device on a part of supported sensing frequency bands.

For example, the sensing type information supported by the first device may include sensing type information supported by the first device on a supported high frequency band, but not including sensing type information supported by the first device on a supported low frequency band.

Due to the high reflectivity and significant multipath effect of the low frequency signal, it is not suitable to use the Radar-based Sensing type. That is, the low frequency band may not support the Radar-based Sensing type, and thus the sensing type information supported by the first device may not include the sensing type information corresponding to the low frequency band.

In some embodiments, whether the first device supports sensing between devices of the same type, in other words, whether it supports peer to peer (P2P) sensing, may refer to for example whether the first device supports sensing between STAs or sensing between APs.

As an example, the first device may be an AP, and the AP may transmit an indication of whether the AP supports sensing between APs during a sensing discovery process. Further, if the AP supports sensing between APs, Wi-Fi sensing may be performed between APs. For example, an AP supporting sensing between APs may transmit illumination signals to one or more APs.

As an example, the first device may be an STA, and the STA may transmit an indication of whether the STA supports sensing between STAs during a sensing discovery process. Further, if the STA supports sensing between STAs, Wi-Fi sensing may be performed between STAs. For example, an STA supporting sensing between STAs may transmit illumination signals to one or more STAs.

In some embodiments, the first information may include a P2P sensing indication, indicating whether the first device supports P2P sensing. That is, whether the first device supports P2P sensing is independent of frequency bands, in other words, the first device has the same capability in supporting or not supporting P2P sensing on all frequency bands.

In some other embodiments, the first information may include a plurality of P2P sensing indications each corresponding to a frequency band, and each P2P sensing indication indicates whether the first device supports P2P sensing on the corresponding frequency band. That is, whether the first device supports P2P sensing is dependent on frequency bands. In this case, the first device has the same or different capabilities in supporting or not supporting P2P sensing on each frequency band.

In some embodiments, whether the first device supports sensing between one device and a plurality of devices, or whether the first device supports one-to-multiple sensing, may be e.g., whether the first device supports one-to-multiple Wi-Fi sensing.

Optionally, one-to-multiple here may refer to: one Sensing Initiator to multiple Sensing Responders, and/or one Sensing Transmitter to multiple Sensing Receivers.

In some embodiments, the first information may include a one-to-multiple sensing indication, indicating whether the first device supports one-to-multiple sensing. That is, whether the first device supports one-to-multiple sensing is independent of frequency bands, in other words, the first device has the same capability in supporting or not supporting one-to-multiple sensing on all frequency bands.

In other embodiments, the first information may include a plurality of one-to-multiple sensing indications each corresponding to one frequency band, and each one-to-multiple sensing indication indicates whether the first device supports one-to-multiple sensing on the corresponding frequency band. That is, whether the first device supports one-to-multiple sensing is dependent on frequency bands. In this case, the first device has the same or different capabilities in supporting or not supporting one-to-multiple sensing on each frequency band.

In some embodiments, whether the first device supports sensing between a plurality of devices and a plurality of devices, or whether the first device supports multiple-to-multiple sensing, may be e.g., whether the first device supports multiple-to-multiple Wi-Fi sensing.

Optionally, multiple-to-multiple here may refer to: multiple Sensing Initiators to multiple Sensing Responders, and/or multiple Sensing Transmitters to multiple Sensing Receivers.

In some embodiments, the first information may include a multiple-to-multiple sensing indication, indicating whether the first device supports multiple-to-multiple sensing. That is, whether the first device supports multiple-to-multiple sensing is independent of frequency bands, in other words, the first device has the same capability in supporting or not supporting multiple-to-multiple sensing on all frequency bands.

In other embodiments, the first information may include a plurality of multiple-to-multiple sensing indications each corresponding to a frequency band, and each multiple-to-multiple sensing indication indicates whether the first device supports multiple-to-multiple sensing on the corresponding the frequency band. That is, whether the first device supports multiple-to-multiple sensing is dependent on frequency bands. In this case, the first device has the same or different capabilities in supporting or not supporting multiple-to-multiple sensing on each frequency band.

In some embodiments, whether the first device supports trigger-based sensing, for example, may refer to whether the first device supports trigger-based Wi-Fi sensing.

Optionally, the trigger-based sensing may refer to at least one of the trigger frame-based sensing settingup, sensing measurement, and sensing feedback phases. That is, at least one of the sensing settingup, sensing measurement, and sensing feedback phases is initiated based on a trigger frame, rather than initiated by the first device autonomously.

In some embodiments, the first information may include a trigger-based sensing indication, indicating whether the first device supports trigger-based sensing. That is, whether the first device supports trigger-based sensing is independent of frequency bands, in other words, the first device has the same capability in supporting or not supporting trigger-based sensing on all frequency bands.

In some other embodiments, the first information may include a plurality of trigger-based sensing indications each corresponding to a frequency band, and each trigger-based sensing indication indicates whether the first device supports trigger-based sensing on the corresponding frequency band. That is, whether the first device supports trigger-based sensing is dependent on frequency bands. In this case, the first device has the same or different capabilities in supporting or not supporting trigger-based sensing on each frequency band.

In some embodiments, the first device supports trigger-based sensing. In this case, the trigger-based sensing indication can be set to 1, indicating that the first device supports trigger-based sensing. Alternatively, the first information may not include the trigger-based sensing indication, and if the trigger-based sensing indication is not included, the first device supports trigger-based sensing by default.

In some embodiments, whether the first device supports pairwise sensing may refer to, for example, whether the first device supports pairwise sensing in a specific phase of a sensing process.

Optionally, the specific phase may include at least one of the sensing settingup, sensing measurement, and sensing feedback phases.

In some embodiments, a Sensing Initiator and a Sensing Responder may form a pair. Assuming that there is one Sensing Initiator and three Sensing Responders, the Sensing Initiator may form a pair with each Sensing Responder. In other words, the sensing session between pairwise devices is 1-to-1.

In some embodiments, the first information may include a pairwise sensing indication, indicating whether the first device supports pairwise sensing. That is, whether the first device supports pairwise sensing is independent of frequency bands, in other words, the first device has the same capability in supporting or not supporting pairwise sensing on all frequency bands.

In other embodiments, the first information may include a plurality of pairwise sensing indications each corresponding to a frequency band, and each pairwise sensing indication indicates whether the first device supports pairwise sensing on the corresponding frequency band. That is, whether the first device supports pairwise sensing is dependent on frequency bands. In this case, the first device has the same or different capabilities in supporting or not supporting pairwise sensing on each frequency band.

It should be understood that, in the embodiment of the present disclosure, the first information may be transmitted in any frame used for communication between the first device and the third device, and the present disclosure is not limited to this.

Hereinafter, with reference to specific scenarios, specific solutions for carrying the sensing capability information of the first device on the plurality of frequency bands will be described.

In some embodiments, the first device may be an access point AP, the third device may be an STA, and the sensing capability information of the first device on the plurality of frequency bands may be transmitted via at least one of:
a Beacon frame, a Probe Response frame, and an Association Response frame.

In some embodiments, the first information may be transmitted during a sensing capability discovery process.

As shown in FIG. 6, the first device is an AP, and the first device is a sensing initiator, then the AP may transmit to the STA via at least one frame among Beacon, Probe Response and Association Response. When the STA receives at least one of the above frames, it can learn the sensing capability information of the AP on a plurality of frequency bands.

Similarly, the STA may include the sensing capability information of the STA on a plurality of frequency bands in a request frame transmitted to the AP, such that the AP may learn the sensing capability information of the STA on the plurality of frequency bands. For example, the STA may transmit an association request frame to the AP, requesting to be associated with the AP, and at the same time informing the AP of the sensing capability information of the STA on the plurality of frequency bands.

In some other embodiments, the first device is an STA, the third device is an AP, and the sensing capability information of the first device on the plurality of frequency bands may be transmitted via at least one of:
a Probe Request frame and an Association Request frame.

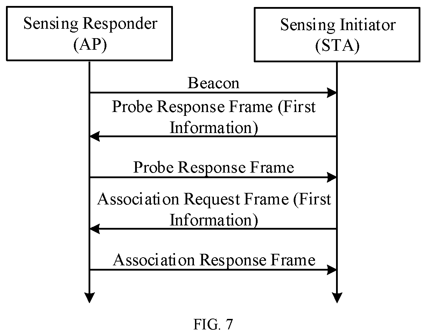

As shown in FIG. 7, the first device is an STA, and the STA is a sensing initiator. Then, the STA may transmit the sensing capability information of the STA on a plurality of frequency bands to the AP via at least one of a Probe Request frame and an Association Request frame. When the AP receives at least one of the above frames, it can learn the sensing capability information of the STA on the plurality of frequency bands.

As mentioned above, the AP can include the sensing capability information of the AP on a plurality of frequency bands in the frame transmitted to the STA, so as to achieve exchange of the sensing capability information of the two on the plurality of frequency bands.

In some embodiments, a Sensing Capabilities element may be added in a Beacon frame, a broadcast Probe Response frame, a Probe Request frame and a Probe Response frame, a (Re)Association Request frame and a (Re)Association Response frame, to carry the sensing capability information of the first device on the plurality of frequency bands. In some other embodiments, a Sensing Capabilities element can also be added in other relevant frame structures, or a Sensing Capabilities field can be added in reserved bits of an existing frame structure to carry the above first information. The embodiment of the present disclosure is not limited to any specific solution for carrying the first information in a frame.

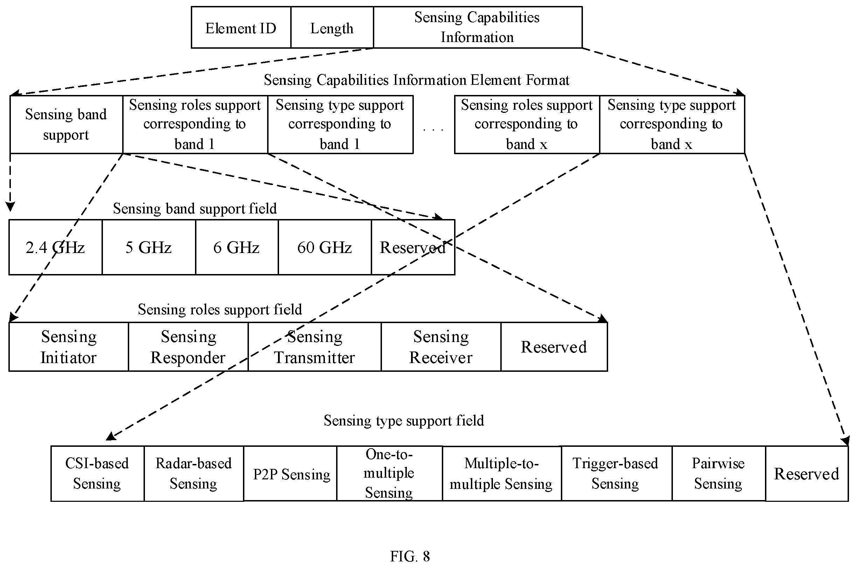

FIG. 8 is a schematic diagram showing a format of a Sensing Capabilities element according to an embodiment of the present disclosure.

As shown in FIG. 8, the Sensing Capabilities element may include the following fields: an element ID, a length, and a Sensing Capabilities field.

Optionally, the number of octets occupied by the element ID field can be 1 octet, the number of octets occupied by the length field can be 1 octet, and the number of octets occupied by the Sensing Capabilities field can be determined based on the carried content, and the present disclosure is not limited to this.

Continuing with FIG. 8, the Sensing Capabilities field may include a Sensing band support field, a Sensing roles support field, and a Sensing type support field.

Optionally, the Sensing Capabilities field may further include a P2P sensing field, a one-to-multiple sensing field, a multiple-to-multiple sensing field, a trigger-based sensing field, and a pairwise sensing field, indicating whether the first device supports P2P Sensing, one-to-multiple sensing, multiple-to-multiple sensing, trigger-based sensing, and pairwise sensing, respectively.

In some embodiments, in the Sensing Capabilities element, the P2P sensing field, the one-to-multiple sensing field, the multiple-to-multiple sensing field, the trigger-based sensing field, and the pairwise sensing field and the sensing band support field, the sensing roles support field, and the sensing type support field are at the same level. For example, the P2P sensing field, the one-to-multiple sensing field, the multiple-to-multiple sensing field, the trigger-based sensing field, and the pair sensing field may be provided after the sensing type support field.

In other embodiments, in the Sensing Capabilities element, the P2P sensing field, the one-to-multiple sensing field, the multiple-to-multiple sensing field, the trigger-based sensing field, and the pairwise sensing field may be provided in subfields of the sensing type support field. The embodiment of the present disclosure is not limited to any specific positions in the Sensing Capabilities element for carrying the P2P sensing field, the one-to-multiple sensing field, the multiple-to-multiple sensing field, the trigger-based sensing field, and the pairwise sensing field. FIG. 8 only illustrates an example where the P2P sensing field, the one-to-multiple sensing field, the multiple-to-multiple sensing field, the trigger-based sensing field and the pairwise sensing field are provided the subfields of the sensing type support field, but the present disclosure is not limited to this.

In some embodiments, the sensing band support field may indicate the sensing frequency band supported by the first device in a bitmap manner.

As an example, the sensing band support field occupies 1 octet or 8 bits, of which N bits correspond to N sensing frequency bands, where N represents the total number of sensing frequency bands. For example, if there are four sensing frequency bands: 2.4GHz, 5GHz, 6GHz, and 60GHz, then N can be 4, and each of the N bits corresponds to one sensing frequency band. The value of each bit indicates whether the first device supports the corresponding sensing frequency band. Assuming that B7~B4 correspond to 2.4GHz, 5GHz, 6GHz, and 60GHz respectively, if the values of B7~B4 are 1101, it means that the sensing frequency bands supported by the first device are 2.4GHz, 5GHz, and 60GHz.

In some embodiments, as shown in FIG. 8, the sensing roles support field may include the sensing roles supported by the first device on each supported sensing frequency band. In this case, the sensing roles supported by the first device on each supported sensing frequency band may be the same or different.

In some embodiments, as shown in FIG. 8, the sensing type support field may include the sensing types supported by the first device on each supported sensing frequency band. In this case, the sensing types supported by the first device on each supported sensing frequency band may be the same or different.

Optionally, the number of octets occupied by the sensing roles field supported by the first device on each supported sensing frequency band may be 1 octet or other numbers of octets, and the present disclosure is not limited to this.

In some embodiments, the sensing roles field supported by the first device on each supported sensing frequency band may indicate the sensing roles supported by the first device on each sensing frequency band in a bitmap.

As an example, the sensing roles field supported by the first device on each supported sensing frequency band occupies 1 octet, or 8 bits, of which M bits correspond to M sensing roles. For example, as shown in FIG. 8, if the sensing roles include a sensing initiator, a sensing responder, a sensing transmitter, and a sensing receiver, then M is 4, and each of the 4 bits corresponds to a sensing role. The value of each bit indicates whether the corresponding sensing role is supported. For example, a value of 1 indicates supported, and a value of 0 indicates not supported. Assuming that B7~B4 correspond to sensing initiator, sensing responder, sensing transmitter, and sensing receiver, respectively, if the value of B7~B3 is 1010, it means that the sensing roles supported by the first device are sensing initiator and sensing transmitter.

Optionally, the number of octets occupied by the sensing type field supported by the first device on each supported sensing frequency band may be 1 octet or other numbers of octets, and the present disclosure is not limited to this.

In some embodiments, the sensing type field supported by the first device on each supported sensing frequency band may indicate the sensing types supported by the first device on each sensing frequency band in a bitmap.

As an example, the sensing type field supported by the first device on each supported sensing frequency band occupies 1 octet, or 8 bits, of which K bits correspond to K sensing types. For example, as shown in FIG. 8, if the sensing types include CSI-based Sensing and Radar-based Sensing, then K can be 2, and each of the 2 bits corresponds to a sensing type. The value of each bit indicates whether the first device supports the corresponding sensing type on the sensing frequency band. For example, a value of 1 indicates supported, and a value of 0 indicates not supported. Assuming that B7~B6 correspond to CSI-based Sensing and Radar-based Sensing, respectively, if the value of B7~B6 is 10, it means that the sensing type supported by the first device is CSI-based Sensing.

In some embodiments, the corresponding P2P sensing field, the one-to-multiple sensing field, the multiple-to-multiple sensing field, the trigger-based sensing field, and the pairwise sensing field on each supported sensing frequency band of the first device may occupy 1 bit.

It should be understood that in the example of FIG. 8, the P2P sensing field, the one-to-multiple sensing field, the multiple-to-multiple sensing field, the trigger-based sensing field, and the pair sensing field are dependent on frequency bands. In some other embodiments, the P2P sensing field, the one-to-multiple sensing field, the multiple-to-multiple sensing field, the trigger-based sensing field, and the pairwise sensing field may be independent of frequency bands, that is, for all bands supported by the first device, the P2P sensing field, the one-to-multiple sensing field, the multiple-to-multiple sensing field, the trigger-based sensing field and the pairwise sensing field indicate the same capabilities.

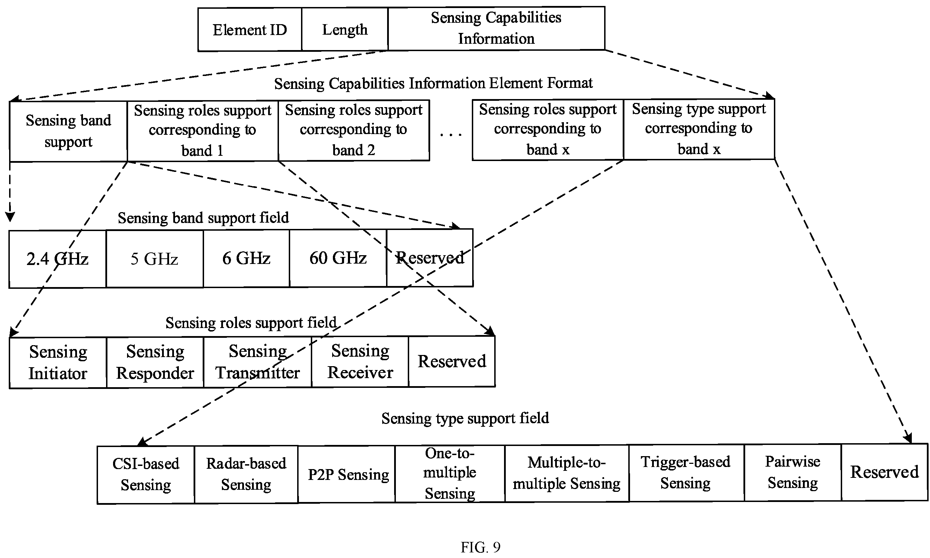

FIG. 9 is a schematic diagram showing a format of a Sensing Capabilities element according to another embodiment of the present disclosure.

Its difference from the format of the Sensing Capabilities element shown in FIG. 8 is that, in the format of the Sensing Capabilities element shown in FIG. 9, the sensing type information supported by the first device may only include sensing type information supported by the first device on part of the supported frequency bands, for example, only the sensing type information supported by the first device on the supported high frequency band.

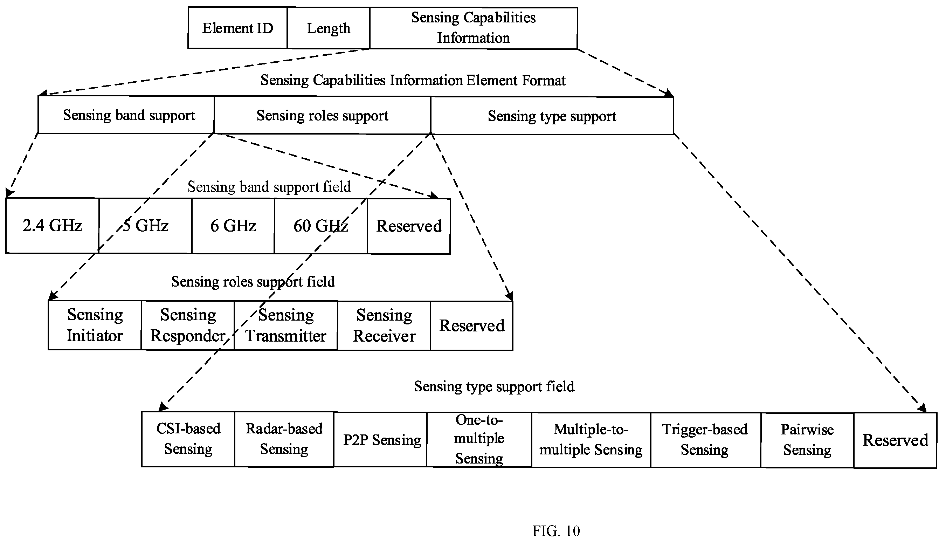

FIG. 10 is a schematic diagram showing a format of a Sensing Capabilities element according to yet another embodiment of the present disclosure.

Its difference from the format of the Sensing Capabilities element shown in FIG. 8 is that, in the format of the Sensing Capabilities element shown in FIG. 10, the sensing role information and the sensing type information supported by the first device are the same on the supported frequency bands. That is, the Sensing Capabilities element may include only one sensing role field and one sensing type field.

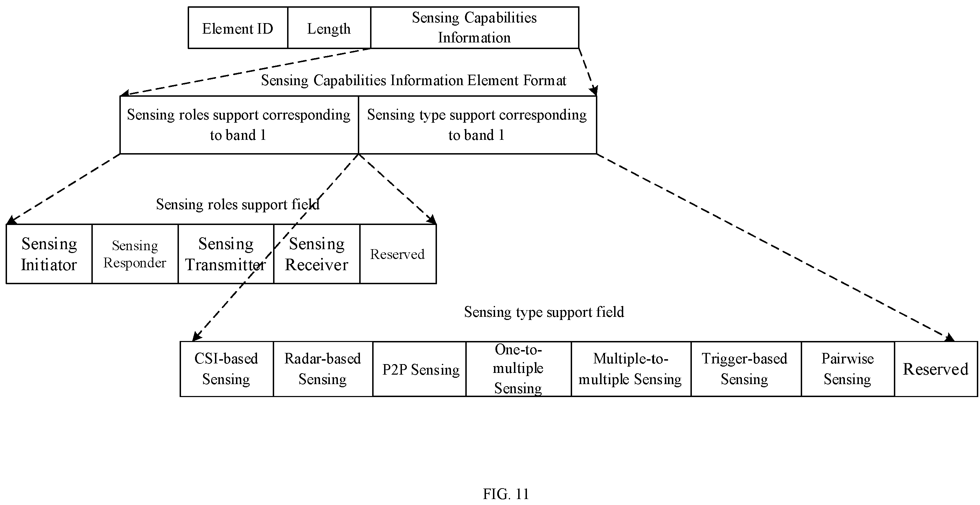

FIG. 11 is a schematic diagram showing a format of a Sensing Capabilities element according to still another embodiment of the present disclosure.

Its difference from the format of the Sensing Capabilities element shown in FIG. 10 is that, in the format of the Sensing Capabilities element shown in FIG. 11, the sensing band field supported by the first device may not be included. In this case, in the Sensing Capabilities element, the sensing role information and the sensing type information may correspond to the operating frequency band of the first device.

It should be noted that, FIG. 8 to FIG. 11 illustrate the examples where the sensing capability information of the first device on the plurality of frequency bands is indicated by adding a Sensing Capabilities element in a frame. In other embodiments, the sensing capability information of the first device on the plurality of frequency bands may be indicated by adding a Sensing Capabilities field, and the present disclosure is not limited to any specific scheme for carrying the sensing capability information of the first device on the plurality of frequency bands.

In some embodiments of the present disclosure, an Extended Capabilities element in a frame may carry the first capability information and the sensing capability information of the first device on the plurality of frequency bands. For example, the reserved bits in the Extended Capabilities element may be used to carry the first capability information and the sensing capability information of the first device on the plurality of frequency bands.

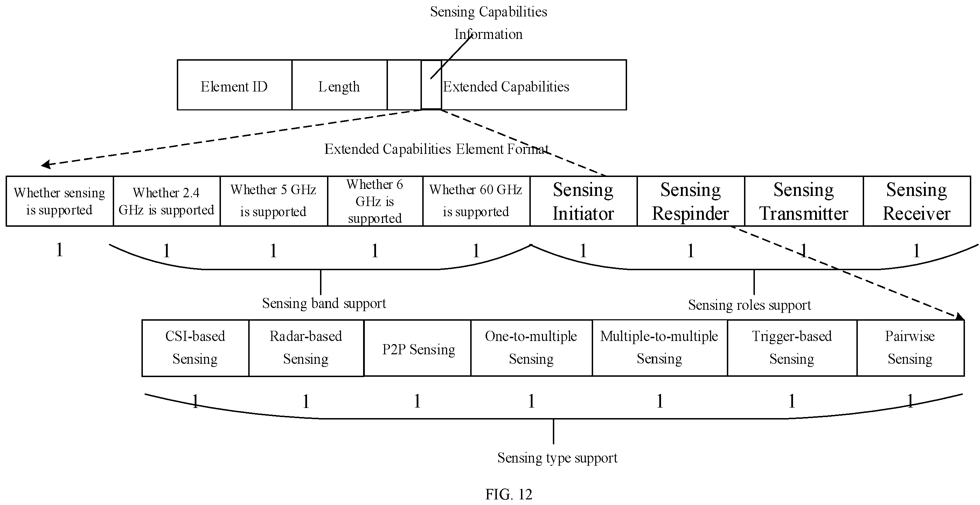

As shown in FIG. 12, the Extended Capabilities element may include the following fields: an element ID, a length, and an Extended Capabilities field.

Optionally, the number of octets occupied by the element ID field can be 1 octet, the number of octets occupied by the length field can be 1 octet, and the number of octets occupied by the Extended Capabilities field can be determined based on the carried content, and the present disclosure is not limited to this.

Continuing with FIG. 12, the Extended Capabilities field may include a whether sensing is supported field, a sensing band support field, a sensing roles support field, and a sensing type support field. Here, the whether sensing is supported field indicates whether the first device supports sensing.

It should be understood that FIG. 12 only illustrates the example where the sensing type support field includes a P2P sensing field, a one-to-multiple sensing field, a multiple-to-multiple sensing field, a trigger-based sensing field, and a pairwise sensing field. In other embodiments, the P2P sensing field, the one-to-multiple sensing field, the multiple-to-multiple sensing field, the trigger-based sensing field and the pairwise sensing field can be provided as sensing capability information at the same level as the support sensing types, and the present disclosure is not limited to this.

It should be noted that for the indication scheme of the sensing band support field, the sensing roles support field, the sensing type support field, the P2P sensing field, the one-to-multiple sensing field, the multiple-to-multiple sensing field, the trigger-based sensing field and the pairwise sensing field in FIG. 12, reference can be made to the related designs of the sensing band support field, the sensing roles support field, the sensing type support field, the P2P sensing field, the one-to-multiple sensing field, the multiple-to-multiple sensing field, the trigger-based sensing field and the pairwise sensing field in the Sensing Capabilities element in FIG. 8 to FIG. 11, and details thereof will be omitted here for the sake of brevity.

In some other embodiments of the present disclosure, the first device may include the first capability information in an Extended Capabilities element in a first frame, and include the sensing capability information of the first device on the plurality of frequency bands in the Sensing Capabilities element in a second frame.

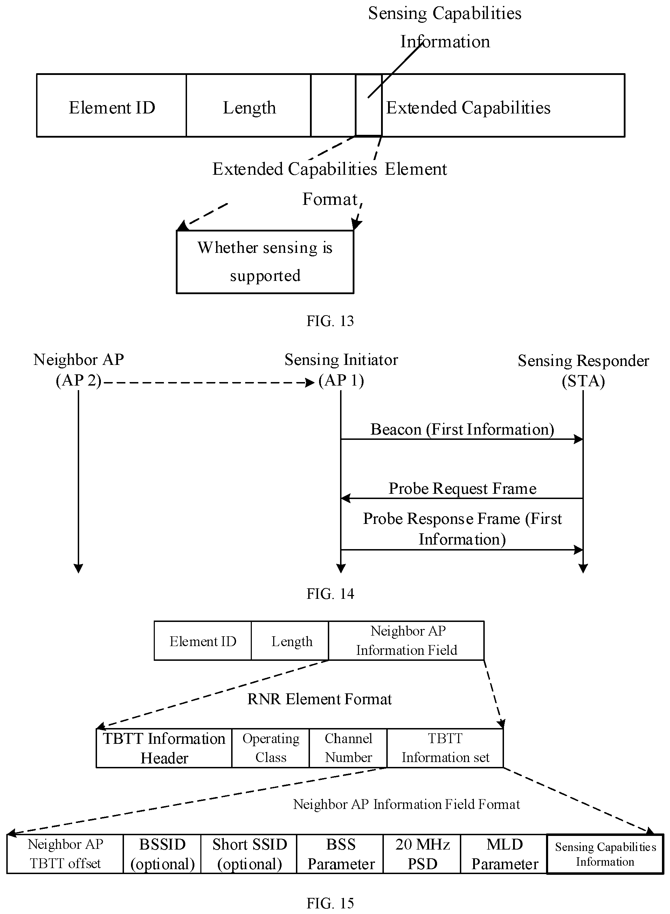

In this case, the format of the Extended Capabilities element is shown in FIG. 13. That is, the Extended Capabilities field only includes a whether sensing is supported field.

Optionally, the first frame and the second frame may be same or different. That is, the first device may indicate the first capability information and the sensing capability information of the first device on the plurality of frequency bands via the same frame or different frames.

In some embodiments, the first device may be an AP, and the first frame may include at least one of:
a Beacon frame, a Probe Response frame, and an Association Response frame.

In some embodiments, the first device may be an AP, and the second frame may include at least one of:
a Beacon frame, a Probe Response frame, and an Association Response frame.

In other embodiments, the first device is may be an STA, and the first frame may include at least one of:
a Probe Request frame and an association Request frame.

In other embodiments, the first device may be an STA, and the second frame may include at least one of:
a Probe Request frame and an Association Request frame.

To summarize, the first device may transmit the sensing capability information of the first device on the operating frequency band, or may transmit the sensing capability information of the first device on the plurality of frequency bands to other devices. The sensing ability information of the first device on the plurality of frequency bands may be same or different.

In some other embodiments of the present disclosure, the first information may include sensing capability information of at least one second device on at least one frequency band.

In some embodiments, the first device may be a first AP, and the at least one second device may include at least one second AP neighboring to the first AP. That is, the first AP may include sensing capability information of another AP to perform sensing capability discovery. In this way, the STA can obtain the sensing capability information of a plurality of APs without interacting with all the APs, thereby expediting the sensing capability discovery process in a multi-AP deployment scenario.

In some embodiments, APs may exchange their sensing capability information when exchange of other information is required.

In some embodiments, the sensing capability information of the at least one second device on the at least one frequency band may include at least one of:
second indication information indicating whether the at least one second device has a sensing capability on a plurality of frequency bands;
sensing frequency band information supported by each second device;
sensing role information supported by each second device;
sensing type information supported by each second device;
whether each second device supports sensing between devices of a same type;
whether each second device supports sensing between one device and a plurality of devices;
whether each second device supports sensing between a plurality of devices and a plurality of devices;
whether each second device supports trigger-based sensing;
whether each second device supports pairwise sensing; and
whether each second device supports WIFI sensing, denoted as second capability information.

In some embodiments, the second indication information may indicate whether the at least one second device has a sensing capability on the plurality of frequency bands in a bitmap. For example, the second indication information may include K bits corresponding to K second devices, and each second device corresponds to one bit. The value of each bit indicates whether the corresponding second device has a sensing capability on the plurality of frequency bands.

In some embodiments, the sensing role information supported by the second device may include a set of sensing role information corresponding to each sensing frequency band supported by the second device. That is, each sensing frequency band supported by the second device may correspond to the same sensing role information.

In some other embodiments, the sensing role information supported by the second device may include sensing role information supported by the second device on each supported sensing frequency band. That is, each sensing frequency band supported by the second device may correspond to independent sensing role information. Optionally, the sensing role supported by the second device on each sensing frequency band may be same or different.

It should be understood that the sensing role information supported by different second devices may be same or different.

In some embodiments, the sensing type information supported by the second device may include a set of sensing type information corresponding to each sensing frequency band supported by the second device. That is, each sensing frequency band supported by the second device may correspond to the same sensing type information.

In some other embodiments, the sensing type information supported by the second device may include sensing type information supported by the second device on each supported sensing frequency band. That is, each sensing frequency band supported by the second device may correspond to independent sensing type information. Optionally, the sensing type supported by the second device on each sensing frequency band may be same or different.

In still other embodiments, the sensing type information supported by the second device may include sensing type information supported by the second device on a part of the supported sensing frequency bands. For example, the sensing type information supported by the second device may include the sensing type information supported by the second device on the supported high frequency band, but not include the sensing type information supported by the second device on the low frequency band.

It should be understood that the sensing type information supported by different second devices may be same or different.

In some embodiments, whether the second device supports sensing between devices of the same type, in other words, whether it supports peer to peer (P2P) sensing, may refer to e.g., whether the second device supports sensing between STAs, or whether the second device supports sensing between APs.

In some embodiments, each second device may correspond to a P2P sensing indication, indicating whether the second device supports P2P sensing. That is, whether the second device supports P2P sensing is independent of frequency bands, in other words, the second device has the same capability in supporting or not supporting P2P sensing on all frequency bands.

In other embodiments, each second device may correspond to a plurality of P2P sensing indications each corresponding to a frequency band, and each P2P sensing indication indicates whether the second device supports P2P sensing on the corresponding frequency band. That is, whether the second device supports P2P sensing is dependent on frequency bands. In this case, the second device has the same or different capabilities in supporting or not supporting P2P sensing on each frequency band.

In some embodiments, whether the second device supports sensing between one device and a plurality of devices, or whether the second device supports one-to-multiple sensing, may be e.g., whether the second device supports one-to-multiple Wi-Fi sensing.

Optionally, one-to-multiple here may refer to: one Sensing Initiator to multiple Sensing Responders, and/or one Sensing Transmitter to multiple Sensing Receivers.

In some embodiments, each second device may correspond to a one-to-multiple sensing indication, indicating whether the second device supports one-to-multiple sensing. That is, whether the second device supports one-to-multiple sensing is independent of frequency bands, in other words, the second device has the same capability in supporting or not supporting one-to-multiple sensing on all frequency bands.

In other embodiments, each second device may correspond to a plurality of one-to-multiple sensing indications each corresponding to one frequency band, and each one-to-multiple sensing indication indicates whether the second device supports one-to-multiple sensing on the corresponding frequency band. That is, whether the second device supports one-to-multiple sensing is dependent on frequency bands. In this case, the second device has the same or different capabilities in supporting or not supporting one-to-multiple sensing on each frequency band.

In some embodiments, whether the second device supports sensing between a plurality of devices and a plurality of devices, or whether the second device supports multiple-to-multiple sensing, may be e.g., whether the second device supports multiple-to-multiple Wi-Fi sensing.

Optionally, multiple-to-multiple here may refer to: multiple Sensing Initiators to multiple Sensing Responders, and/or multiple Sensing Transmitters to multiple Sensing Receivers.

In some embodiments, each second device may correspond to a multiple-to-multiple sensing indication, indicating whether the second device supports multiple-to-multiple sensing. That is, whether the second device supports multiple-to-multiple sensing is independent of frequency bands, in other words, the second device has the same capability in supporting or not supporting multiple-to-multiple sensing on all frequency bands.

In other embodiments, each second device may correspond to a plurality of multiple-to-multiple sensing indications each corresponding to a frequency band, and each multiple-to-multiple sensing indication indicates whether the second device supports multiple-to-multiple sensing on the corresponding the frequency band. That is, whether the second device supports multiple-to-multiple sensing is dependent on frequency bands. In this case, the second device has the same or different capabilities in supporting or not supporting multiple-to-multiple sensing on each frequency band.

In some embodiments, whether the second device supports trigger-based sensing, for example, may refer to whether the second device supports trigger-based Wi-Fi sensing.

Optionally, the trigger-based sensing may refer to at least one of the trigger frame-based sensing settingup, sensing measurement, and sensing feedback phases. That is, at least one of the sensing settingup, sensing measurement, and sensing feedback phases is initiated based on a trigger frame, rather than initiated by the second device autonomously.

In some embodiments, each second device may correspond to a trigger-based sensing indication, indicating whether the second device supports trigger-based sensing. That is, whether the second device supports trigger-based sensing is independent of frequency bands, in other words, the second device has the same capability in supporting or not supporting trigger-based sensing on all frequency bands.

In other embodiments, each second device may correspond to a plurality of trigger-based sensing indications each corresponding to a frequency band, and each trigger-based sensing indication indicates whether the second device supports trigger-based sensing on the corresponding frequency band. That is, whether the second device supports trigger-based sensing is dependent on frequency bands. In this case, the second device has the same or different capabilities in supporting or not supporting trigger-based sensing on each frequency band.

In some embodiments, the second device supports trigger-based sensing. In this case, the trigger-based sensing indication can be set to 1, indicating that the second device supports trigger-based sensing. Alternatively, the second information may not include the trigger-based sensing indication, and if the trigger-based sensing indication is not included, the second device supports trigger-based sensing by default.

In some embodiments, whether the second device supports pairwise sensing may refer to, for example, whether the second device supports pairwise sensing in a specific phase of a sensing process.

Optionally, the specific phase may include at least one of the sensing settingup, sensing measurement, and sensing feedback phases.

In some embodiments, a Sensing Initiator and a Sensing Responder may form a pair. Assuming that there is one Sensing Initiator and three Sensing Responders, the Sensing Initiator may form a pair with each Sensing Responder. In other words, the sensing session between pairwise devices is 1-to-1.

In some embodiments, each second device may correspond to a pairwise sensing indication, indicating whether the second device supports pairwise sensing. That is, whether the second device supports pairwise sensing is independent of frequency bands, in other words, the second device has the same capability in supporting or not supporting pairwise sensing on all frequency bands.

In other embodiments, each second device may correspond to a plurality of pairwise sensing indications each corresponding to a frequency band, and each pairwise sensing indication indicates whether the second device supports pairwise sensing on the corresponding frequency band. That is, whether the second device supports pairwise sensing is dependent on frequency bands. In this case, the second device has the same or different capabilities in supporting or not supporting pairwise sensing on each frequency band.

Hereinafter, with reference to specific scenarios, specific solutions for carrying the sensing capability information of the at least one second device the at least one frequency band will be described.

In some embodiments, the first device may be an AP, and the sensing capability information of the at least one second device on the at least one frequency band may be transmitted via at least one of:
a Beacon frame and a Probe Response frame.

As shown in FIG. 14, the first device is AP1, and AP1 can obtain the sensing capability information of neighbor APs, such as AP2, on at least one frequency band, and further transmit it to an STA during the sensing capability discovery process.

For example, when AP1 initiates the sensing capability discovery process as a sensing initiator, it can include the sensing capability information of the neighbor AP in a Beacon frame or Probe Response, such that the STA can learn the sensing capability information of surrounding APs without having to receive beacons from all APs (or exchange Probe Request/Probe Response with all APs). By receiving the Beacon frame or Probe Response frame transmitted by one AP, the sensing capability information of the surrounding APs can be obtained, which is conducive to expediting the sensing capability discovery process in a multi-AP deployment environment.

In some embodiments, the sensing capability information of the at least one second device on the at least one frequency band may be carried by a Reduced Neighbor Report (RNR) element.

As an example, the sensing capability information of the at least one second device on the at least one frequency band may be carried in a Target Beacon Transmission Time (TBTT) information set field in the RNR element of the Beacon frame and/or the Probe Response frame.

FIG. 15 is a schematic diagram showing an exemplary format of a TBTT Information set filed in an RNR element carrying the sensing capability information of the neighbor AP on at least one frequency band.

As shown in FIG. 15, the RNR element may include the following fields: an element ID, a length, and Neighbor AP Information Fields.

As an example, the numbers of octets corresponding to the above fields are 1, 1, and 6, respectively.

Here, the Neighbor AP Information Fields include the following fields: a TBTT Information header, an Operating Class, a Channel Number, and a TBTT Information set.

As an example, the numbers of octets corresponding to each of the above fields are 2, 1, 1, and variable

Here, the TBTT Information set may include the following fields:
AP TBTT offset, BSSID (optional), (short) SSID, BSS parameter, 20MHz PSD, and Multi-Link Device (MLD) parameter.

In some embodiments, the sensing capability information of the neighbor AP on the at least one frequency band may be added after the MLD parameter subfield in the TBTT Information Set field in the RNR element. For example, a Sensing Capabilities subfield can be added after the MLD parameter subfield to carry the sensing capability information of the neighbor AP on the at least one frequency band.

It should be understood that, in an embodiment of the present disclosure, the sensing capability information of the neighbor AP on the at least one frequency band may be the sensing capability information of the neighbor AP on one single frequency band, such as the sensing capability information on the operating frequency band, or may be sensing capability information of the neighbor AP on a plurality of frequency bands, and the present disclosure is not limited to this.

When the sensing capability information of the neighbor AP on the at least one frequency band is the sensing capability information of the neighbor AP on one single frequency band, for each neighbor AP, the format of the sensing capability information of the neighbor AP on one single frequency band can be the format of Sensing Capabilities shown in FIG. 11. When the sensing capability information of the neighbor AP on the at least one frequency band is the sensing capability information of the neighbor AP on a plurality of frequency bands, for each neighbor AP, the format of the sensing capability information of the neighbor AP on the plurality of frequency bands can be the format of Sensing Capabilities shown in FIGS. 8-10, and details thereof will be omitted here for brevity.

Similarly to the above embodiments, the sensing capability information of the at least one second device on the at least one frequency band may be indicated by adding a Sensing Capabilities element in a frame, or by adding a Sensing Capabilities field. The present disclosure is not limited to any specific scheme for carrying the sensing capability information of the at least one second device on the at least one frequency band.

In still some embodiments of the present disclosure, the first information may include sensing capability information of a nontransmitted BSS of the first device on at least one frequency band.

In some embodiments, the nontransmitted BSS of the first device may also be referred to as a virtual BSS, and there may be one or more virtual BSSs of the first device. A transmitted BSS of the first device is a BSS used by the first device for initiating sensing capability discovery.

In some embodiments, the sensing capability information of the nontransmitted BSS of the first device on the at least one frequency band may include at least one of:
third indication information indicating whether the nontransmitted BSS of the first device has a sensing capability on a plurality of frequency bands;
sensing frequency band information supported by the nontransmitted BSS of the first device;
sensing role information supported by the nontransmitted BSS of the first device; and
sensing type information supported by the nontransmitted BSS of the first device.

In some embodiments, each nontransmitted BSS of the first device corresponds to a piece of third indication information, which indicates whether the nontransmitted BSS has the sensing capability on the plurality of frequency bands.

In some other embodiments, all nontransmitted BSSs of the first device correspond to a piece of third indication information, which indicates whether all nontransmitted BSSs have the sensing capability on the plurality of frequency bands.

In some embodiments, the sensing frequency band information supported by the nontransmitted BSS of the first device may include a set of sensing frequency band information corresponding to each nontransmitted BSS of the first device.

That is, each nontransmitted BSS of the first device may correspond to same sensing frequency band information.

In some other embodiments, the sensing frequency band information supported by the nontransmitted BSS of the first device may include sensing frequency band information correspondingly supported by each nontransmitted BSS of the first device.

That is, each nontransmitted BSS of the first device may correspond to independent sensing frequency band information.

Optionally, the sensing frequency band information corresponding to each nontransmitted BSS of the first device may be same or different.

In some embodiments, the sensing role information supported by the nontransmitted BSS of the first device may include a set of sensing role information corresponding to each nontransmitted BSS of the first device.

That is, each nontransmitted BSS of the first device may correspond to same sensing role information.

In some other embodiments, the sensing role information supported by the nontransmitted BSS of the first device may include sensing role information supported by each nontransmitted BSS of the first device.

That is, each nontransmitted BSS of the first device may correspond to independent sensing role information.

Optionally, the sensing role corresponding to each nontransmitted BSS of the first device may be same or different.

In some embodiments, the sensing type information supported by the nontransmitted BSS of the first device may include a set of sensing type information corresponding to each nontransmitted BSS of the first device.

That is, each nontransmitted BSS of the first device may correspond to same sensing type information.

In some other embodiments, the sensing type information supported by the nontransmitted BSS of the first device may include sensing type information supported by each nontransmitted BSS of the first device.

That is, each nontransmitted BSS of the first device may correspond to independent sensing type information.

Optionally, the sensing type corresponding to each nontransmitted BSS of the first device may be same or different.

In some embodiments, the sensing role information supported by the nontransmitted BSS of the first device on each supported sensing frequency band may be same or different.

In some embodiments, the sensing type information supported by the nontransmitted BSS of the first device on each supported sensing frequency band may be same or different.

To summarize, the sensing frequency band information supported by the nontransmitted BSS of the first device may be at the granularity of device, i.e., all nontransmitted BSSs of the first device may correspond to the same sensing frequency band information, or may be at the granularity of nontransmitted BSS, e.g., each nontransmitted BSS of the first device may correspond to independent sensing frequency band information.

The sensing role information supported by the nontransmitted BSS of the first device may be at the granularity of device, i.e., all nontransmitted BSSs of the first device may correspond to the same sensing role information, or may be at the granularity of nontransmitted BSS, e.g., each nontransmitted BSS of the first device may correspond to independent sensing role information.

From another perspective, the sensing role information supported by the nontransmitted BSS of the first device may be at the granularity of sensing frequency band, e.g., each sensing frequency band supported by the nontransmitted BSS of the first device may correspond to an independent sensing role, or each sensing frequency band supported by the nontransmitted BSS of the first device may correspond to same sensing role.

The sensing type information supported by the nontransmitted BSS of the first device may be at the granularity of device, i.e., all nontransmitted BSSs of the first device correspond to same sensing type information, or may be at the granularity of nontransmitted BSS, i.e., each nontransmitted BSS of the first device may correspond to independent sensing type information.

From another perspective, the sensing type information supported by the nontransmitted BSS of the first device may be at the granularity of sensing frequency band, e.g., each sensing frequency band supported by the nontransmitted BSS of the first device may correspond to an independent sensing type, or each sensing frequency band supported by the nontransmitted BSS of the first device may correspond to same sensing type.

Hereinafter, with reference to specific scenarios, specific solutions for carrying the sensing capability information of the nontransmitted BSS of the first device on at least one frequency band will be described.

In some embodiments, the sensing capability information of the nontransmitted BSS of the first device on the at least one frequency band may be carried in a transmitted BSSID element in a multi-basic parameter set identifier (Multi-BSSID) element.

In some embodiments, the first device may be an AP, and the sensing capability information of the nontransmitted BSS of the first device on the at least one frequency band may be transmitted via at least one of:
a Beacon frame and Probe Response frame.

For example, it may be carried in a transmitted BSSID of a Multi-BSSID element in a Beacon frame or a Probe Response frame.

It should be understood that the Beacon frame in an embodiment of the present disclosure may be a DMG Beacon frame.

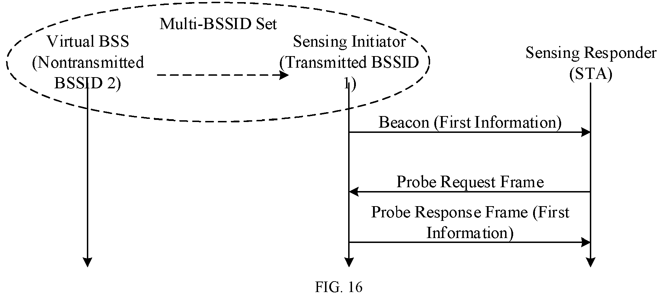

As shown in FIG. 16, the first device may be an AP, and the Multi-BSSID set of the AP may include transmitted BSSID1 and nontransmitted BSSID2. Here, the nontransmitted BSSID2 is a virtual BSS of the AP, and the transmitted BSSID1 of the AP can be used as a sensing initiator to initiate a sensing capability discovery process. Further, the sensing capability information of the nontransmitted BSSID2 on at least one frequency band may be carried in a frame transmitted to an STA during the sensing capability discovery process. For example, by including the sensing capability information of the nontransmitted BSSID2 on the at least one frequency band in the Beacon frame and/or the Probe Response frame, the sensing capability of the nontransmitted BSSID in the Multi-BSSID set can be discovered efficiently.

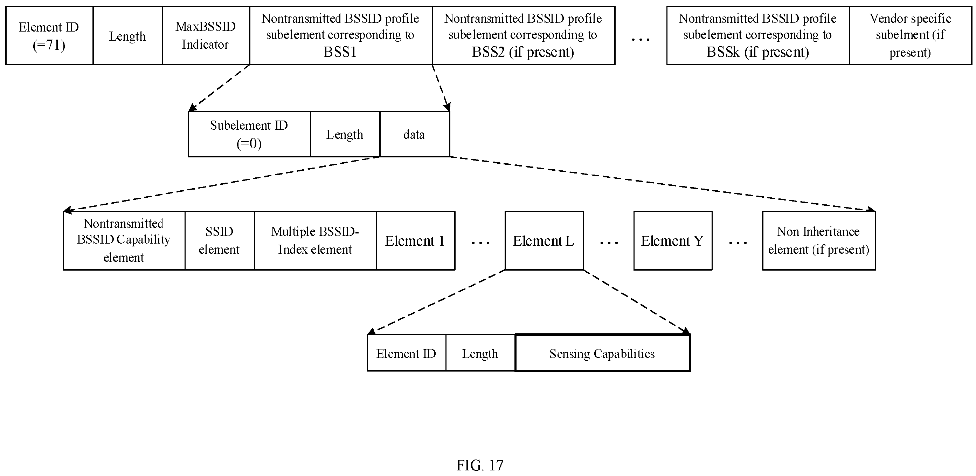

FIG. 17 is a schematic diagram showing a format of a Multi-BSSID element according to an embodiment of the present disclosure.

As shown in FIG. 17, the Multi-BSSID element may include the following fields: element ID, length, maximum BSSID indicator (MaxBSSID indicator), at least one nontransmitted BSSID profile subelement, and vendor specific subelment (if present).

Further, the nontransmitted BSSID profile subelement may include the following fields:

Subelement ID, Length, and data.

Here, the data field can include the following fields:

Nontransmitted BSSID Capability element, SSID element, Multiple BSSID-Index element, at least one element, and Non Inheritance element (if present).

In some embodiments, as shown in FIG. 17, a Sensing Capabilities element may be added in each nontransmitted BSSID profile subelement in the Multi-BSSID element to indicate the sensing capability information of each nontransmitted BSSID on the at least one frequency band. That is, each nontransmitted BSSID may correspond to independent sensing capability information.

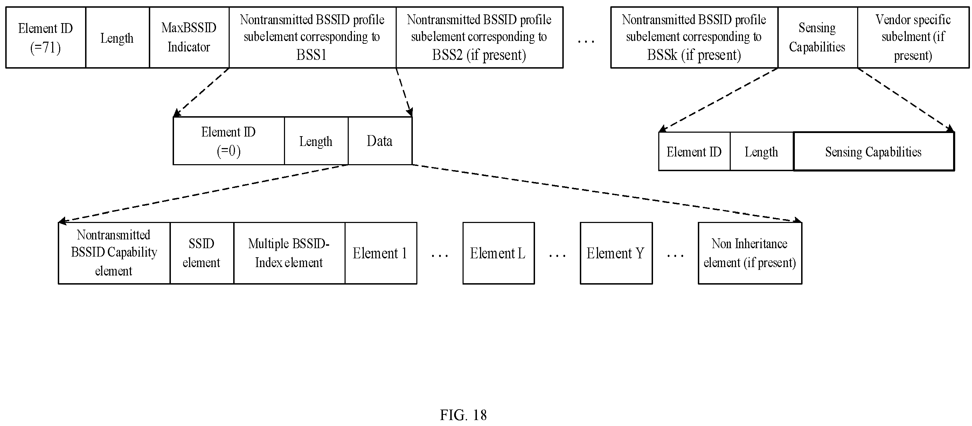

In some other embodiments, as shown in FIG. 18, a Sensing Capabilities element may be added in the Multi-BSSID element to indicate the sensing capability information of all nontransmitted BSSIDs. That is, all nontransmitted BSSIDs correspond to same sensing capability information.

It should be understood that, in an embodiment of the present disclosure, the sensing capability information of the nontransmitted BSS of the first device on the at least one frequency band may be the sensing capability information of the nontransmitted BSS of the first device on one single frequency band, such as the sensing capability information on the operating frequency band, or may be sensing capability information of the nontransmitted BSS of the first device on a plurality of frequency bands.

It should be noted that when the sensing capability information of the nontransmitted BSS of the first device on the at least one frequency band is the sensing capability information of the nontransmitted BSS of the first device on one single frequency band, for each nontransmitted BSS of the first device, the format of the sensing capability information of the nontransmitted BSS on one single frequency band can be the format of Sensing Capabilities shown in FIG. 11. When the sensing capability information of the nontransmitted BSS of the first device on the at least one frequency band is the sensing capability information of the nontransmitted BSS of the first device on the plurality of frequency bands, for each nontransmitted BSS, the format of the sensing capability information of the nontransmitted BSS on the plurality of frequency bands can be the format of Sensing Capabilities shown in FIGS. 8-10, and details thereof will be omitted here for brevity.

Similarly to the above embodiments, the sensing capability information of the nontransmitted BSS of the first device on the at least one frequency band may be indicated by adding a Sensing Capabilities element in a frame, or by adding a Sensing Capabilities field. The present disclosure is not limited to any specific scheme for carrying the sensing capability information of the nontransmitted BSS of the first device on the at least one frequency band.

Based on the above embodiments, when the first device performs sensing capability discovery on a first frequency band (such as a low frequency band), it carries the sensing capability information of the first device on a plurality of frequency bands (such as a high frequency band and a low frequency band), such that sensing capability discovery on the plurality of frequency bands can be completed in one frequency band between devices, which reduces the overhead of sensing capability discovery.

In addition, the first device may also carry the sensing capability information of other devices on at least one frequency band. For example, in a multi-AP scenario, an AP can not only carry the sensing capability information of surrounding APs on one frequency band, but also carry the sensing capability information of the surrounding APs on a plurality of frequency bands, thereby expediting the STA's process for discovery of the APs' sensing capabilities.

In addition, the transmitted BSSID in the Multi-BSSID set of the first device carries the sensing capability information of the nontransmitted BSSID on the at least one frequency band in the Multi-BSSID element, such that in the scenario where the first device has the Multi-BSSID set, the function of sensing capability discovery of the nontransmitted BSSID can be implemented.

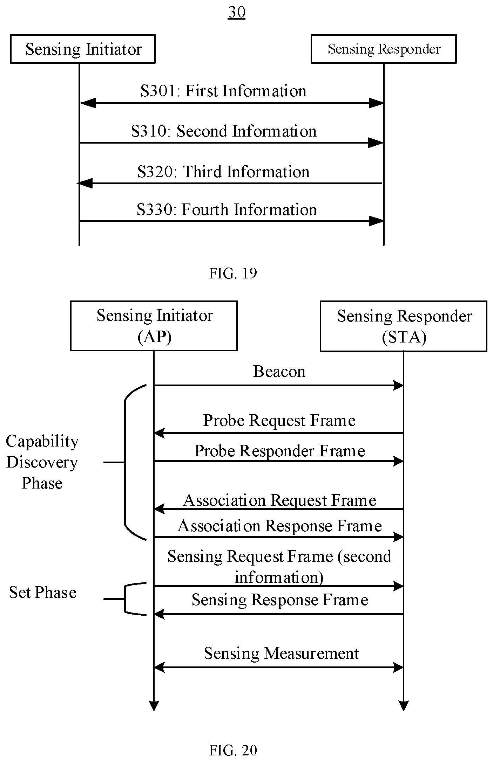

FIG. 19 is a schematic interaction diagram illustrating a wireless communication method 30 according to another embodiment of the present disclosure. As shown in FIG. 19, the method may include at least part of the following content.

At S310, a sensing initiator transmits second information to a sensing responder, the second information being used to establish at least one sensing session.

In some embodiments, the sensing initiator may be an AP, and the sensing responder may be an STA.

In some other embodiments, the sensing initiator may be an STA, and the sensing responder may be an AP.

In some embodiments of the present disclosure, before S310, the method 30 may further include:

At S301, the sensing initiator and the sensing responder exchange first information.

For the specific content of the first information exchanged between the sensing initiator and the sensing responder, reference can be made to the relevant implementation of the first information in the method 20, and details thereof will be omitted here for the sake of brevity.

As an example, the sensing initiator may be an AP, and the sensing responder may be an STA, and the first information transmitted by the AP to the STA may include sensing capability information of the AP on a plurality of frequency bands, or may include sensing capability information of neighbor APs on at least one frequency band, or may include sensing capability information of a nontransmitted BSSID of the AP on at least one frequency band. The sensing capability information transmitted by the STA to the AP may include sensing capability information of the STA on a plurality of frequency bands.

In some embodiments, the second information may include at least one of:
an order of the at least one sensing session;
sensing band information of the at least one sensing session;
time information of the at least one sensing session;
sensing role information in each of the at least one sensing session;
a measurement feedback type of the at least one sensing session;
sensing channel information for sensing measurement of the at least one sensing session; and
fourth indication information indicating whether to confirm third information that is response information to the second information.

In some embodiments, the order of the at least one sensing session may be a number corresponding to the at least one sensing session, or may indicate a priority order of the at least one sensing session, that is, which sensing session needs to be established first.

In some embodiments, the second information may not include the sensing band information of the at least one sensing session. In this case, a sensing frequency band corresponding to the at least one sensing session may be considered as an operating frequency band of the sensing initiator.

In some embodiments, the second information may include a plurality of sensing frequency bands corresponding to at least one sensing session.

In some embodiments, the time information of the at least one sensing session may include a start time and a duration, the start time and the duration corresponding to each of the at least one sensing session.

In some embodiments, the sensing role information in each of the at least one sensing session may include at least one of:

an ID of a sensing transmitter in each sensing session, a number of sensing transmitters in each sensing session, an ID of a sensing receiver in each sensing session, a number of sensing receivers in each sensing session, an ID of a sensing processor in each sensing session, and a number of sensing processors in each sensing session.

In some embodiments, the measurement feedback type of the at least one sensing session may include at least one of:
compressed Channel State Information (CSI), range-Doppler map, and range-time map corresponding to the at least one sensing session.

In some embodiments, the sensing channel information may include at least one of:
a serial number of a sensing channel and a channel bandwidth of the sensing channel.

In some embodiments of the present disclosure, content indicated by the fourth indication information may be determined according to a scenario of the sensing session. For example, the sensing initiator may determine the content indicated by the fourth indication information according to the sensing role information in each of the at least one sensing session.

In some scenarios, since the Sensing Initiator in a Sensing session may not be a Sensing Transmitter or a Sensing Receiver, when the Sensing session is established, if a Sensing Transmitter or a Sensing Receiver rejects the Sensing Initiator's request to establish the Sensing session, and the other Sensing roles in the Sensing session are not aware of this situation, they will continue to perform the subsequent sensing measurement phase, resulting in unnecessary signaling overhead. In an embodiment of the present disclosure, the sensing initiator may instruct the sensing responder to confirm the setting of the sensing session, so as to ensure that each Sensing role in the Sensing session has a consistent understanding of the establishment of the Sensing session.

As an example, if it is determined according to the sensing role information in the at least one sensing session that the sensing initiator is the only sensing transmitter in the at least one sensing session, then it is determined that the fourth indication information indicates not to confirm the third information.

As an example, if it is determined according to the sensing role information in the at least one sensing session that the sensing initiator is the only sensing receiver in the at least one sensing session, then it is determined that the fourth indication information indicates not to confirm the third information.

As an example, if it is determined according to the sensing role information in the at least one sensing session that the sensing initiator is not the only sensing transmitter in the at least one sensing session, it is determined that the fourth indication information indicates to confirm the third information.

As an example, if it is determined according to the sensing role information in the at least one sensing session that the sensing initiator is not the only sensing receiver in the at least one sensing session, it is determined that the fourth indication information indicates to confirm the third information.

In some embodiments, the second information may be carried in a Sensing Request frame. In this case, the sensing initiator may be an AP or an STA.

FIG. 20 is a schematic interaction diagram illustrating a sensing initiator transmitting second information via a Sensing Request frame to perform sensing setting.

In some other embodiments, the second information may be carried in an Association Request frame. That is, the sensing setting can be performed in the association process. In this case, the induction initiator may be an STA.

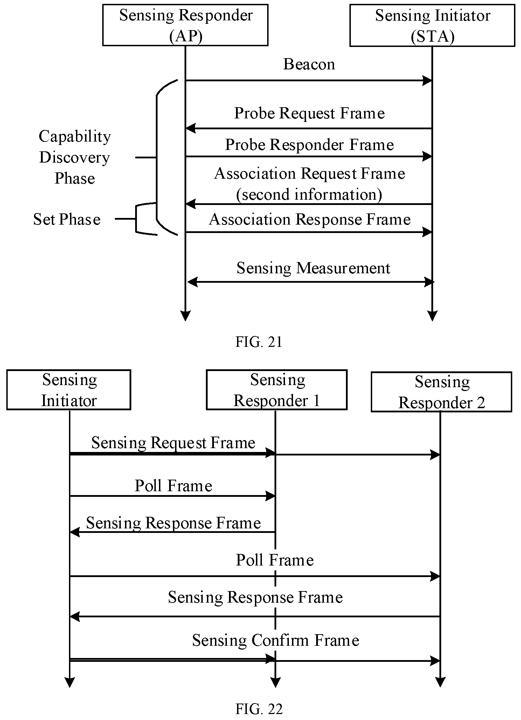

FIG. 21 is a schematic interaction diagram illustrating a sensing initiator transmitting second information via an Association Request frame to perform sensing setting.

In some embodiments of the present disclosure, as shown in FIG. 19, the method 30 may further include:

At S320, the sensing responder returns third information to the sensing initiator, the third information being response information to the second information.

Optionally, in some embodiments, the third information may include at least one of:
an order of the at least one sensing session; and
sensing status information of the at least one sensing session, indicating whether the sensing responder agrees to establish the sensing session.

In some embodiments, the sensing status information of the at least one sensing session may include one piece of sensing status information indicating whether the sensing responder agrees to establish all sensing sessions.

In some other embodiments, the sensing status information of the at least one sensing session may include at least one piece of sensing status information each corresponding to one sensing session, and each piece of sensing status information indicates whether the sensing responder agrees to establish the corresponding sensing session. For example, each sensing session corresponds to 1-bit sensing status indication information, and the value of the 1-bit sensing status indication information indicates whether the establishment of the sensing session is agreed. For example, a value of 1 indicates agreed, and a value of 0 indicates not agreed.

In some embodiments, the third information may be carried in a Sensing Response frame. In this case, the sensing responder may be an AP or an STA.

For example, when the second information is transmitted via a Sensing Request, the sensing responder may return the third information via a Sensing Response frame.

In some other embodiments, the third information may be carried in an Association Response frame. In this case, the sensing responder may be an AP.

For example, when the second information is transmitted via an Association Request, the sensing responder may return the third information via an Association Response frame.

Hereinafter, an example where the second information is transmitted via a Sensing Request frame and the third information is returned via a Sensing Response frame will be described for illustration, but the present disclosure is not limited to this.

In some embodiments of the present disclosure, there may be one sensing responder, which is denoted as Scenario 1, that is, a one-to-one sensing setting scenario. In this case, the sensing initiator may transmit the second information to the sensing responder by means of unicast.

In other embodiments of the present disclosure, there may be a plurality of sensing responders, which is denoted as Scenario 2, that is, one-to-multiple sensing setting. In this case, the sensing initiator may transmit the second information by means of unicast or multicast.

For Scenario 2, if the second information can be transmitted by means of multicast, a plurality of sensing responders may return the third information in the following schemes:
Scheme 1: the plurality of sensing responders return the third information based on a poll frame (Poll);
Scheme 2: the plurality of sensing responders simultaneously return the third information based on a trigger frame (Trigger); and
Scheme 3: the plurality of sensing responders sequentially return the third information according to a specific return sequence.

For Scenario 2, if the second information can be transmitted by means of unicast, the sensing responder may respond to the second information received by unicast in sequence.

In the following, with reference to FIG. 22 to FIG. 25, the transmission of the sensing request frame and the sensing response frame will be described with reference to an example with one sensing initiator and two sensing responders.

As shown in FIG. 22, the sensing initiator may transmit a sensing request frame to the sensing responder 1 and the sensing responder 2 by means of multicast for sensing setting, the sensing request frames including the above second information.

Further, the sensing responder 1 and the sensing responder 2 may return sensing response frames based on a Poll frame transmitted by the sensing initiator.

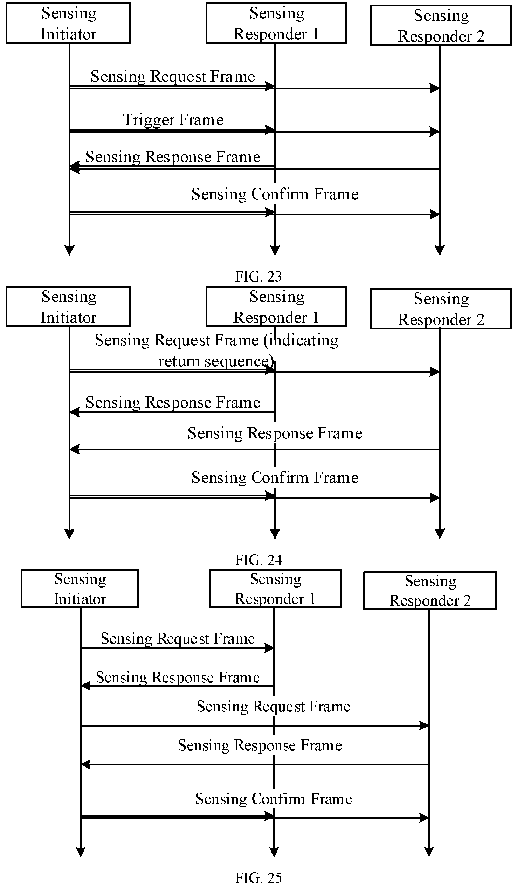

As shown in FIG. 23, the sensing initiator may transmit a sensing request frame to the sensing responder 1 and the sensing responder 2 by means of multicast for sensing setting, the sensing request frames including the above second information.

Further, the sensing responder 1 and the sensing responder 2 may simultaneously return sensing response frames based on a Trigger frame transmitted by the sensing initiator.

As shown in FIG. 24, the sensing initiator may transmit a sensing request frame to the sensing responder 1 and the sensing responder 2 by means of multicast for sensing setting, the sensing request frames including the above second information.

Optionally, the sensing request frame may further include a return sequence of sensing response frames, for example, the sensing responder 1 returns first, and the sensing responder 2 returns next.

Further, the sensing responder 1 and the sensing responder 2 may return sensing response frames sequentially according to the return sequence indicated by the sensing initiator.

As shown in FIG. 25, the sensing initiator may sequentially transmit sensing request frames to the sensing responder 1 and the sensing responder 2 by means of unicast for sensing setting, the sensing request frames including the above second information.

Then, the sensing responder 1 and the sensing responder 2 may return sensing response frames for the sensing request frames transmitted by the sensing initiator in sequence.

In some embodiments of the present disclosure, as shown in FIG. 19, the method 30 may further include:

At S330, the sensing initiator transmits fourth information to the sensing responder, the fourth information being confirm information for the third information.

In some embodiments, the fourth information may be carried in a Sensing Confirm frame.

In some embodiments, the sensing initiator may return the fourth information to the sensing responder when the fourth indication information indicates that confirmation of the third information is required.

In some other embodiments, the sensing initiator may confirm the third information in any case.

In still some other embodiments, if there is a sensing session that is rejected to be established, the sensing initiator may confirm to a device associated with a sensing role in the rejected sensing session.

In some embodiments of the present disclosure, the fourth information may include at least one of:
an order of the at least one sensing session;
sensing status information corresponding to the at least one sensing session; and
session establishment related information of a target sensing session the sensing responder agrees to establish.

In some embodiments, the sensing status information corresponding to the at least one sensing session may be indicated in a bitmap. For example, the fourth information may include a first bitmap, the first bitmap including P bits corresponding to P sensing sessions, respectively, where P is the total number of sensing sessions requested to be established. Each bit corresponds to a sensing session, and a value of each bit indicates whether to agree to establish the corresponding sensing session.

In some embodiments, the session establishment related information of the target sensing session may include at least one of:
sensing frequency band information of the target sensing session;
time information of the target sensing session;
sensing role information in each sensing session of the target sensing session;
a measurement feedback type of the target sensing session; and
sensing channel information for sensing measurement of the target sensing session.

Optionally, the session establishment related information of the target sensing session may be same as or different from session establishment related information of the sensing session carried in the sensing request frame.

Optionally, when the session establishment related information of the target sensing session agreed to be established is the same as the session establishment related information of the sensing session carried in the sensing request frame, the fourth information may not include the session establishment related information of the target sensing session.

In some embodiments, the S330 may specifically include:
transmitting, by the sensing initiator, the fourth information to all sensing responders.

In other embodiments, the S330 may specifically include:
transmitting, by the sensing initiator, the fourth information to at least one first sensing responder, the at least one first sensing device including a sensing responder associated with a sensing session rejected to be established.

The sensing initiator transmits the fourth information to the sensing responders associated with the sensing session that is rejected to be established, such that these sensing responders can learn the information on the sensing session that is rejected to be established. Thus, the sensing responder that is rejected to establish a session can be prevented from continuing with a subsequent sensing measurement phase, which would result in unnecessary signaling overhead.

The specific implementation of the sensing setting process will be described below in combination with specific scenarios.

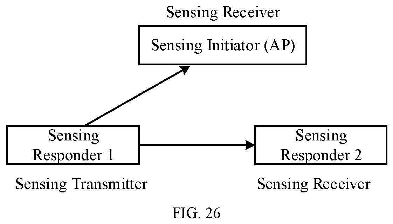

In some scenarios, as shown in FIG. 26, a Sensing Session to be established is: Sensing Responder 1 transmits a sensing illumination signal to Sensing Responder 2.

For this Sensing Session, the Sensing Initiator is not the only sensing receiver, and then the Sensing Initiator can set the fourth indication information to indicate that the third information needs to be confirmed. For example, the fourth indication information is a 1-bit session confirmation indication, and a value of 1 indicates confirmation is required, and a value of 0 indicates no confirmation is required.

Further, the Sensing Initiator requests to establish the Sensing Session by transmitting a Sensing Request frame to Sensing Responder 1 and Sensing Responder 2.

Sensing Responder 1 and Sensing Responder 2 can transmit Sensing Response frames to the Sensing Initiator. For the transmission of the Sensing Response frames, reference can be made to the relevant description of the above embodiments, and details thereof will be omitted here.

If Sensing Responder 1 agrees to establish the Sensing Session, but Sensing Responder 2 rejects to establish the Sensing Session, then Sensing Responder 1 does not need to transmit a sensing illumination signal to Sensing Responder 2, but at this time Sensing Responder 1 does not know that Sensing Responder 2 rejects to establish the Sensing Session, so the Sensing Initiator is required to confirm by sensing negotiation.

In some implementations, the Sensing Initiator transmits a Sensing Confirm frame to all Sensing Responders, and further, Sensing Responder 1 determines whether to transmit a sensing illumination signal according to the sensing status indication of the sensing session in the Sensing Confirm frame.

In other implementations, the Sensing Session is rejected, which is known to Sensing Responder 2, but not to Sensing Responder 1, so the Sensing Initiator transmits a Sensing Confirm frame to Sensing Responder 1, and includes the sensing status information of the Sensing Session in the Sensing Confirm frame, such that Sensing Responder 1 can determine whether to transmit a sensing illumination signal according to the sensing status information of the Sensing Session in the Sensing Confirm frame.

For example, Sensing Responder 1 may not need to transmit a sensing illumination signal to Sensing Responder 2 within the Sensing Session, for example, it may enter a sleep mode or be in other operating modes, and Sensing Responder 2 may not keep receiving sensing illumination signals within the corresponding time of the Sensing Session, for example, it may enter a sleep mode or be in other operating modes.

Hereinafter, with reference to specific embodiments, specific solutions for carrying the second information, the third information, and the fourth information in a frame will be described.

In some embodiments, the second information may be carried by a Sensing Request frame. For example, a Sensing Request element may be added in the Sensing Request frame to carry the second information. Alternatively, a Sensing Request field may be added in the Sensing Request frame to carry the second information.

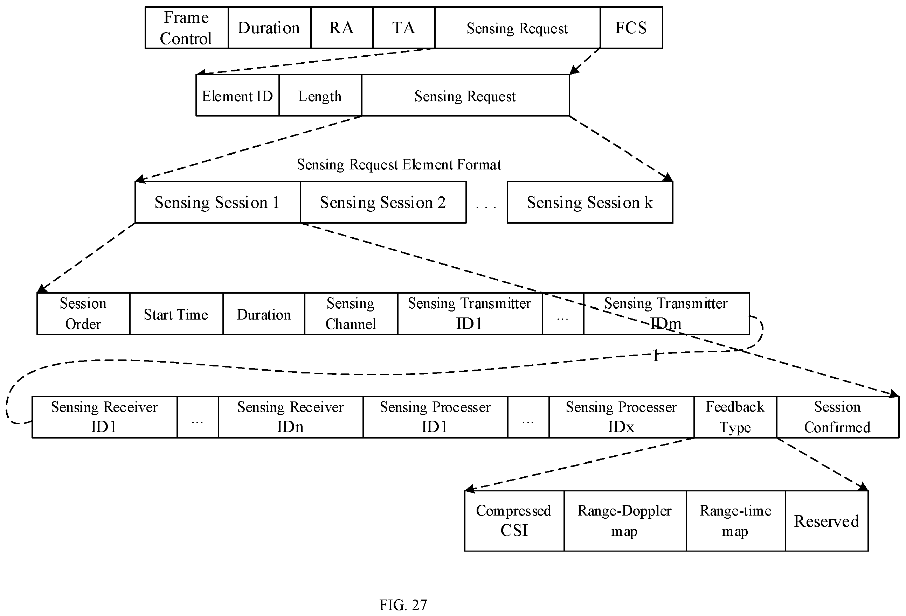

FIG. 27 is a schematic diagram showing a format of a Sensing Request frame carrying a Sensing Request element.

As shown in FIG. 27, the Sensing Request element may include the following fields: element ID, length and Sensing Request fields.

Optionally, the number of octets occupied by the element ID field can be 1 octet, the number of octets occupied by the length field can be 1 octet, and the number of octets occupied by the Sensing Request field can be determined based on the carried content, and the present disclosure is not limited to it.

Continuing with FIG. 27, the Sensing Request field may include k Sensing Session fields, carrying session establishment related information of up to k Sensing Sessions, where k is a positive integer.

In some embodiments, each Sensing Session field may include the following fields:
Session Order, Session Start Time, Session Duration, Sensing Channel, Sensing Transmitter in Sensing Session, Sensing Receiver in Sensing Session, Sensing Processer in Sensing Session, Feedback Type, and session confirmation indication (Session Confirmed) indicating whether session confirmation is required.

In some embodiments, the sensing role field in the sensing session field may include an ID field corresponding to the sensing role, which carries the ID of each sensing role in the sensing session.

It should be understood that in the format shown in FIG. 27, the number of octets occupied by each sensing role field in the sensing session is only illustrative. For example, the sensing transmitter field may occupy m octets and carry IDs of up to m sensing transmitters, the sensing receiver field may occupy n octets and carry IDs of up to m sensing receivers, and the sensing processor field can occupy x octets and carry IDs of up to x sensing processors, where m, n, x can be same or different.

In some other embodiments, the sensing role field in the sensing session field may include a number field corresponding to sensing roles and ID fields corresponding to sensing roles, which are used to carry the number and IDs of each sensing role in the sensing session. In this case, the number of octets occupied by each sensing role field may be determined according to the scenario of the sensing session.

Optionally, the number of octets occupied by each of the above fields may be 1, 4, 2, 1, 1, 1, 1, 1, 1, 1, 1, 1, respectively, and the present disclosure is not limited to this.

In the Sensing Request element shown in FIG. 27, the sensing frequency band information corresponding to the sensing session may not be included. In this case, it may be considered that the sensing frequency band corresponding to the sensing session is the operating frequency band of the Sensing Initiator.

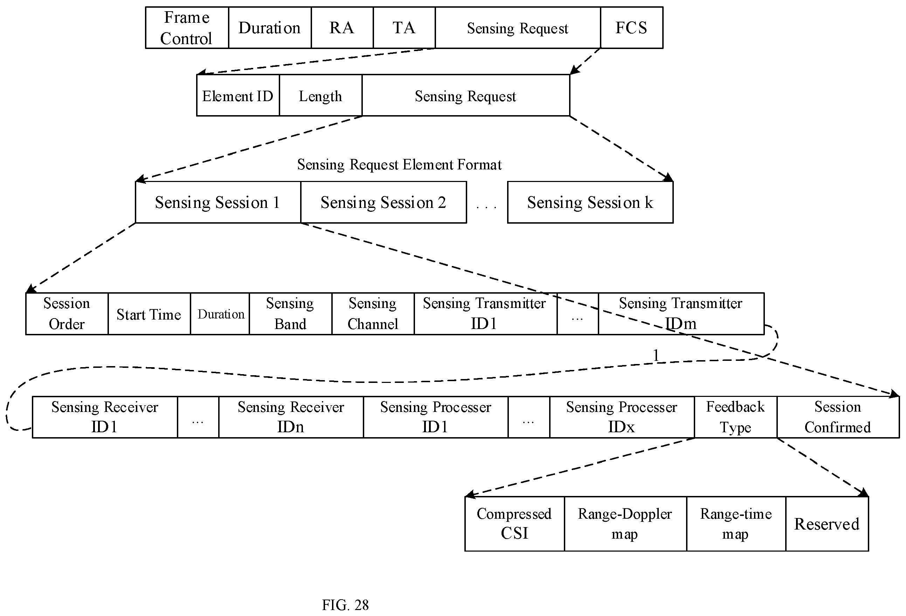

FIG. 28 is a schematic diagram showing another format of a Sensing Request frame carrying a Sensing Request element.

Its difference from the format shown in FIG. 27 is that each Sensing Session field may further include a corresponding sensing frequency band field.

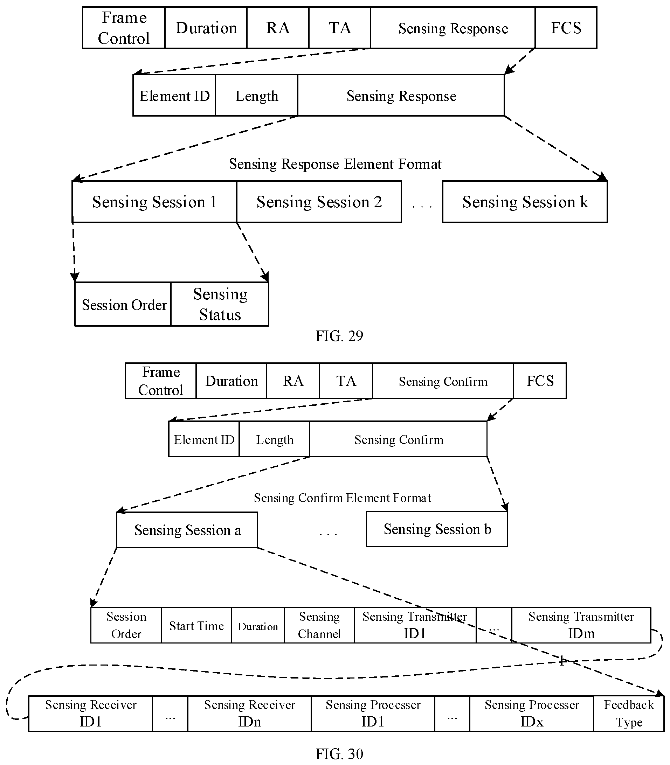

In some embodiments, the third information may be carried by a Sensing Response frame. For example, a Sensing Response element may be added in the Sensing Response frame to carry the third information. Alternatively, a Sensing Response field may be added in the Sensing Response frame to carry the third information. FIG. 29 is a schematic diagram showing a format of a Sensing Response frame carrying a Sensing Response element.

As shown in FIG. 29, the Sensing Response element may include the following fields: element ID, length and Sensing Response fields.

Optionally, the number of octets occupied by the element ID field can be 1 octet, the number of octets occupied by the length field can be 1 octet, and the number of octets occupied by the Sensing Response field can be determined based on the carried content, and the present disclosure is not limited to it.

Continuing with FIG. 29, the Sensing Response field may include a Sensing Session field.

In some embodiments, each Sensing Session field may include the following fields:
Session Order and Sensing Status of Session. For example, Sensing Status may be 1 bit, and the value of the 1 bit being 1 indicates agreed, and the value being 0 indicates rejected.

In the Sensing Response element shown in FIG. 29, the sensing frequency band information corresponding to the sensing session may not be included.

It should be understood that the above only exemplifies the formats of the Sensing Request frame and the Sensing Response frame carrying the second information and the third information. When the second information and the third information are carried by the Association Request frame and the Association Response frame, the formats are similar, and details thereof will be omitted for the sake of brevity.

In some embodiments, the fourth information may be carried by a Sensing Confirm frame. For example, a Sensing Confirm element may be added in the Sensing Confirm frame to carry the fourth information, or a Sensing Confirm field may be added in the Sensing Confirm frame to carry the fourth information.

FIG. 30 is a schematic diagram showing the format of a Sensing Confirm frame carrying a Sensing Confirm element.

As shown in FIG. 30, the Sensing Confirm element may include the following fields: element ID, length and Sensing Confirm fields.

Optionally, the number of octets occupied by the element ID field can be 1 octet, the number of octets occupied by the length field can be 1 octet, and the number of octets occupied by the Sensing Confirm field can be determined based on the carried content, and the present disclosure is not limited to this.

Continuing with FIG. 30, the Sensing Confirm field may include at least one Sensing Session field.

Here, the at least one Sensing Session field may be used to carry session establishment related information of the sensing session agreed to be established.

For example, if Sensing Session a and Sensing Session b are sensing sessions agreed to be established, the Sensing Confirm frame may carry the session establishment related information of Sensing Session a and Sensing Session b.

In some embodiments, each Sensing Session field may include the following fields:

Session Order, Session Start Time, Session Duration, Sensing Channel, Sensing Transmitter in Sensing Session, Sensing Receiver in Sensing Session, Sensing Processer in Sensing Session, and Feedback Type.

Optionally, the number of octets occupied by each of the above fields may be 1, 4, 2, 1, 1, 1, 1, 1, 1, 1, 1, respectively, and the present disclosure is not limited to this.

In some embodiments, the sensing role field in the sensing session field may include an ID field corresponding to the sensing role, which is used to carry the ID of each sensing role in the sensing session agreed to be established.

In some other embodiments, the sensing role field in the sensing session field may include a number field corresponding to sensing roles and ID fields corresponding to sensing roles, which are used to carry the number and IDs of each sensing role in the sensing session. In this case, the number of octets occupied by each sensing role field may be determined according to the scenario of the sensing session.

It should be understood that in the format shown in FIG. 30, the number of octets occupied by each sensing role field in the sensing session is only illustrative. For example, the sensing transmitter field may occupy m octets and carry IDs of up to m sensing transmitters, the sensing receiver field may occupy n octets and carry IDs of up to m sensing receiver, and the sensing processor field may occupy x octets and carry IDs of up to x sensing processors, where m, n, x can be same or different.

It should be noted that if the session establishment related information corresponding to the sensing session agreed to be established is the same as the session establishment related information corresponding to the sensing session requested to be established, the Sensing Confirm frame may only include the session order of the sensing session agreed to be established, but not including the session establishment related information, which can reduce the overhead of the Sensing Confirm frame.

In the Sensing Confirm element shown in FIG. 30, the sensing frequency band information corresponding to the sensing session may not be included. In this case, it may be considered that the sensing frequency band corresponding to the sensing session is the operating frequency band of the Sensing Initiator.

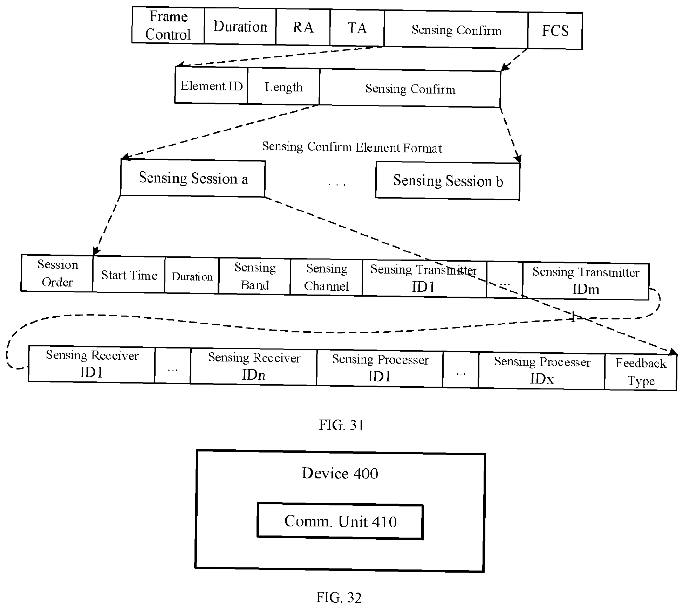

FIG. 31 is a schematic diagram showing another format of a Sensing Confirm frame carrying a Sensing Confirm element.

Its difference from the format shown in FIG. 30 is that each Sensing Session field may further include a corresponding sensing frequency band field.

In some embodiments, the fourth information may be carried by a Sensing Confirm frame. For example, a Sensing Confirm element may be added in the Sensing Confirm frame to carry the fourth information. Alternatively, a Sensing Confirm field may be added in the Sensing Confirm frame to carry the fourth information.

To summarize, the embodiment of the present disclosure can expedite the process of one-to-multiple sensing setting by designing the process of sensing setting between one Sensing Initiator and multiple Sensing Responders. In addition, for the case where the STA is the Sensing Initiator, the sensing setting process can be integrated with a device association process, which facilitates reducing signaling overhead and expediting the sensing setting process.

Moreover, for a scenario with a plurality of Sensing Responders, when a Sensing Responder rejects to establish a Sensing session, the corresponding Sensing Transmitter and/or Sensing Receiver cannot know the result of the sensing setting, and remains awake in the rejected Sensing session, causing waste of time and power. In the embodiment of the present disclosure, a mechanism for the Sensing Initiator to determine whether to confirm the result of the sensing setting according to the scenario of the session is designed, so as to expedite the process of confirming the sensing setting. Moreover, by confirming the result of the sensing setting of the session, the Sensing Transmitter and/or Sensing Receiver of the rejected corresponding sensing session can be informed of the result of the sensing setting, such that the Sensing Transmitter and/or Sensing Receiver can enter a non-operative mode, such as a sleep mode, within the duration of the sensing session, thereby reducing power consumption.

FIG. 32 shows a schematic block diagram of a wireless communication device 400 according to an embodiment of the present disclosure. As shown in FIG. 32, the device 400 includes:
a communication unit 410 configured to transmit first information on a first frequency band, the first information including sensing capability information of a target device on at least one frequency band.

In some embodiments, the first information may include sensing capability information of the first device on a plurality of frequency bands.

In some embodiments, the sensing capability information of the first device on the plurality of frequency bands may include at least one of:
first indication information indicating whether the first device has a sensing capability on the plurality of frequency bands;
sensing frequency band information supported by the first device;
sensing role information supported by the first device;
sensing type information supported by the first device;
whether the first device supports sensing between devices of a same type;
whether the first device supports sensing between one device and a plurality of devices;
whether the first device supports sensing between a plurality of devices and a plurality of devices;
whether the first device supports trigger-based sensing;
whether the first device supports pairwise sensing; and
whether the first device supports Wireless Fidelity (WiFi) sensing.

In some embodiments, the sensing role information supported by the first device may include a set of sensing role information corresponding to each sensing frequency band supported by the first device; or
the sensing role information supported by the first device may include sensing role information supported by the first device on each supported sensing frequency band.

In some embodiments, the sensing type information supported by the first device may include a set of sensing type information corresponding to each sensing frequency band supported by the first device;
the sensing type information supported by the first device may include sensing type information supported by the first device on each supported sensing frequency band; or
the sensing type information supported by the first device may include sensing type information supported by the first device on a part of supported sensing frequency bands.

In some embodiments, the first device may be an Access Point (AP), and the sensing capability information of the first device on the plurality of frequency bands may be transmitted via at least one of:
a beacon frame, a probe response frame, and an association response frame.

In some embodiments, the first device may be a Station (STA), and the sensing capability information of the first device on the plurality of frequency bands may be transmitted via at least one of:
a probe request frame and an association request frame.

In some embodiments, the sensing capability information of the first device on the plurality of frequency bands may be carried by a Sensing Capabilities element in a first frame and/or an Extended Capabilities element in a second frame.

In some embodiments, whether the first device supports WIFI sensing may be determined according to whether a first frame includes a Sensing Capabilities element, and when the first device supports WIFI sensing, other sensing capability information of the first device on the plurality of frequency bands may be carried by the Sensing Capabilities element in the first frame;
whether the first device supports WIFI sensing may be determined according to a first subfield of an Extended Capabilities element in a second frame, and when the first device supports WIFI sensing, other sensing capability information of the first device on the plurality of frequency bands may be carried by one or more other subfields of the Extended Capabilities element in the second frame; or
whether the first device supports WIFI sensing may be determined according to the first subfield of the Extended Capabilities element in the second frame, and when the first device supports WIFI sensing, other sensing capability information of the first device on the plurality of frequency bands may be carried by the Sensing Capabilities element in the first frame.

In some embodiments, the first frame and the second frame may be same, or the first frame and the second frame may be different.

In some embodiments, the first information may include sensing capability information of at least one second device on at least one frequency band.

In some embodiments, the first device may be a first AP, and the at least one second device may include at least one second AP neighboring to the first AP.

In some embodiments, the sensing capability information of the at least one second device on the at least one frequency band may include at least one of:
second indication information indicating whether the at least one second device has a sensing capability on a plurality of frequency bands;
sensing frequency band information supported by each second device;
sensing role information supported by each second device;
sensing type information supported by each second device;
whether each second device supports sensing between devices of a same type;
whether each second device supports sensing between one device and a plurality of devices;
whether each second device supports sensing between a plurality of devices and a plurality of devices;
whether each second device supports trigger-based sensing;
whether each second device supports pairwise sensing; and
whether each second device supports WIFI sensing.

In some embodiments, the sensing role information supported by each second device may include a set of sensing role information corresponding to each sensing frequency band supported by each second device; or
the sensing role information supported by each second device may include sensing role information supported by each second device on each supported sensing frequency band.

In some embodiments, the sensing type information supported by each second device may include a set of sensing type information corresponding to each sensing frequency band supported by each second device; or
the sensing type information supported by each second device may include sensing type information supported by each second device on each supported sensing frequency band.

In some embodiments, the first device may be an AP, and the sensing capability information of the at least one second device on the at least one frequency band may be transmitted via at least one of:
a beacon frame and a probe response frame.

In some embodiments, the sensing capability information of the at least one second device on the at least one frequency band may be carried in a Target Beacon Transmission Time (TBTT) information set field in a Reduced Neighbor Report (RNR) element of the beacon frame and/or the probe response frame.

In some embodiments, the first information may include sensing capability information of a nontransmitted Basic Service Set (BSS) of the first device on at least one frequency band.

In some embodiments, the sensing capability information of the nontransmitted BSS of the first device on the at least one frequency band may include at least one of:
third indication information indicating whether the nontransmitted BSS of the first device has a sensing capability on a plurality of frequency bands;
sensing frequency band information supported by the nontransmitted BSS of the first device;
sensing role information supported by the nontransmitted BSS of the first device; and
sensing type information supported by the nontransmitted BSS of the first device.

In some embodiments, the sensing frequency band information supported by the nontransmitted BSS of the first device may include a set of sensing frequency band information corresponding to each nontransmitted BSS of the first device; or
the sensing frequency band information supported by the nontransmitted BSS of the first device may include sensing frequency band information correspondingly supported by each nontransmitted BSS of the first device.

In some embodiments, the sensing role information supported by the nontransmitted BSS of the first device may include a set of sensing role information corresponding to each nontransmitted BSS of the first device; or
the sensing role information supported by the nontransmitted BSS of the first device may include sensing role information supported by each nontransmitted BSS of the first device.

In some embodiments, the sensing type information supported by the nontransmitted BSS of the first device may include a set of sensing type information corresponding to each nontransmitted BSS of the first device; or
the sensing type information supported by the nontransmitted BSS of the first device may include sensing type information supported by each nontransmitted BSS of the first device.

In some embodiments, the sensing role information supported by the nontransmitted BSS of the first device may include sensing role information supported by the nontransmitted BSS of the first device on each supported sensing frequency band.

In some embodiments, the sensing type information supported by the nontransmitted BSS of the first device may include sensing type information supported by the nontransmitted BSS of the first device on each supported sensing frequency band.

In some embodiments, the sensing capability information of the nontransmitted BSS of the first device on the at least one frequency band may be transmitted via at least one of:
a beacon frame and a probe response frame.

In some embodiments, the sensing capability information of the nontransmitted BSS of the first device on the at least one frequency band may be carried in a transmitted Basic Service Set Identifier (BSSID) element in a multi-BSSID of the beacon frame and/or the probe response frame.

In some embodiments, the first device may be a sensing initiator.

In some embodiments, the first frequency band may be a low frequency band.

Optionally, in some embodiments, the above communication unit may be a communication interface or a transceiver, or an input/output interface of a communication chip or a system-on-chip.

It can be appreciated that the device 400 according to the embodiment of the present disclosure may correspond to the first device in the method embodiment of the present disclosure, and the above and other operations and/or functions of the respective units in the device 400 are provided for the purpose of implementing the process flow corresponding to the first device in the method 20 shown in FIG. 5, and details thereof will be not omitted here for brevity.

FIG. 31 is a schematic block diagram of a device according to an embodiment of the present disclosure. As shown in FIG. 31, the device 500 includes:
a communication unit 510 configured to receive first information transmitted by a first device on a first frequency band, the first information comprising sensing capability information of a target device on at least one frequency band.

In some embodiments, the first information may include sensing capability information of the first device on a plurality of frequency bands.

In some embodiments, the sensing capability information of the first device on the plurality of frequency bands may include at least one of:
first indication information indicating whether the first device has a sensing capability on the plurality of frequency bands;
sensing frequency band information supported by the first device;
sensing role information supported by the first device;
sensing type information supported by the first device;
whether the first device supports sensing between devices of a same type;
whether the first device supports sensing between one device and a plurality of devices;
whether the first device supports sensing between a plurality of devices and a plurality of devices;
whether the first device supports trigger-based sensing;
whether the first device supports pairwise sensing; and
whether the first device supports Wireless Fidelity (WiFi) sensing.

In some embodiments, the sensing role information supported by the first device may include a set of sensing role information corresponding to each sensing frequency band supported by the first device; or

the sensing role information supported by the first device may include sensing role information supported by the first device on each supported sensing frequency band.

In some embodiments, the sensing type information supported by the first device may include a set of sensing type information corresponding to each sensing frequency band supported by the first device;
the sensing type information supported by the first device may include sensing type information supported by the first device on each supported sensing frequency band; or
the sensing type information supported by the first device may include sensing type information supported by the first device on a part of supported sensing frequency bands.

In some embodiments, the first device may be an Access Point (AP), the third device may be a Station (STA), and the sensing capability information of the first device on the plurality of frequency bands may be transmitted via at least one of:
a beacon frame, a probe response frame, and an association response frame.

In some embodiments, the first device may be a Station (STA), the third device may be an Access Point (AP), and the sensing capability information of the first device on the plurality of frequency bands may be transmitted via at least one of:
a probe request frame and an association request frame.

In some embodiments, the sensing capability information of the first device on the plurality of frequency bands may be carried by a Sensing Capabilities element in a first frame and/or an Extended Capabilities element in a second frame.

In some embodiments, whether the first device supports WIFI sensing may be determined according to whether a first frame includes a Sensing Capabilities element, and when the first device supports WIFI sensing, other sensing capability information of the first device on the plurality of frequency bands may be carried by the Sensing Capabilities element in the first frame;
whether the first device supports WIFI sensing may be determined according to a first subfield of an Extended Capabilities element in a second frame, and when the first device supports WIFI sensing, other sensing capability information of the first device on the plurality of frequency bands may be carried by one or more other subfields of the Extended Capabilities element in the second frame; or
whether the first device supports WIFI sensing may be determined according to the first subfield of the Extended Capabilities element in the second frame, and when the first device supports WIFI sensing, other sensing capability information of the first device on the plurality of frequency bands may be carried by the Sensing Capabilities element in the first frame.

In some embodiments, the first frame and the second frame may be same, or the first frame and the second frame may be different.

In some embodiments, the first information may include sensing capability information of at least one second device on at least one frequency band.

In some embodiments, the first device may be a first AP, and the at least one second device may include at least one second AP neighboring to the first AP.

In some embodiments, the sensing capability information of the at least one second device on the at least one frequency band may include at least one of:
second indication information indicating whether the at least one second device has a sensing capability on a plurality of frequency bands;
sensing frequency band information supported by each second device;
sensing role information supported by each second device;
sensing type information supported by each second device;
whether each second device supports sensing between devices of a same type;
whether each second device supports sensing between one device and a plurality of devices;
whether each second device supports sensing between a plurality of devices and a plurality of devices;
whether each second device supports trigger-based sensing;
whether each second device supports pairwise sensing; and
whether each second device supports WIFI sensing.

In some embodiments, the sensing role information supported by each second device may include a set of sensing role information corresponding to each sensing frequency band supported by each second device; or
the sensing role information supported by each second device may include sensing role information supported by each second device on each supported sensing frequency band.

In some embodiments, the sensing type information supported by each second device may include a set of sensing type information corresponding to each sensing frequency band supported by each second device; or
the sensing type information supported by each second device may include sensing type information supported by each second device on each supported sensing frequency band.

In some embodiments, the first device may be an AP, and the sensing capability information of the at least one second device on the at least one frequency band may be transmitted via at least one of:
a beacon frame and a probe response frame.

In some embodiments, the sensing capability information of the at least one second device on the at least one frequency band may be carried in a Target Beacon Transmission Time (TBTT) information set field in a Reduced Neighbor Report (RNR) element of the beacon frame and/or the probe response frame.

In some embodiments, the first information may include sensing capability information of a nontransmitted Basic Service Set (BSS) of the first device on at least one frequency band.

In some embodiments, the sensing capability information of the nontransmitted BSS of the first device on the at least one frequency band may include at least one of:
third indication information indicating whether the nontransmitted BSS of the first device has a sensing capability on a plurality of frequency bands;
sensing frequency band information supported by the nontransmitted BSS of the first device;
sensing role information supported by the nontransmitted BSS of the first device; and
sensing type information supported by the nontransmitted BSS of the first device.

In some embodiments, the sensing frequency band information supported by the nontransmitted BSS of the first device may include a set of sensing frequency band information corresponding to each nontransmitted BSS of the first device; or
the sensing frequency band information supported by the nontransmitted BSS of the first device may include sensing frequency band information correspondingly supported by each nontransmitted BSS of the first device.

In some embodiments, the sensing role information supported by the nontransmitted BSS of the first device may include a set of sensing role information corresponding to each nontransmitted BSS of the first device; or
the sensing role information supported by the nontransmitted BSS of the first device may include sensing role information supported by each nontransmitted BSS of the first device.

In some embodiments, the sensing type information supported by the nontransmitted BSS of the first device may include a set of sensing type information corresponding to each nontransmitted BSS of the first device; or
the sensing type information supported by the nontransmitted BSS of the first device may include sensing type information supported by each nontransmitted BSS of the first device.

In some embodiments, the sensing role information supported by the nontransmitted BSS of the first device may include sensing role information supported by the nontransmitted BSS of the first device on each supported sensing frequency band.

In some embodiments, the sensing type information supported by the nontransmitted BSS of the first device may include sensing type information supported by the nontransmitted BSS of the first device on each supported sensing frequency band.

In some embodiments, the sensing capability information of the nontransmitted BSS of the first device on the at least one frequency band may be transmitted via at least one of:
a beacon frame and a probe response frame.

In some embodiments, the sensing capability information of the nontransmitted BSS of the first device on the at least one frequency band may be carried in a transmitted Basic Service Set Identifier (BSSID) element in a multi-BSSID of the beacon frame and/or the probe response frame.

In some embodiments, the first device may be a sensing initiator.

In some embodiments, the first frequency band may be a low frequency band.

Optionally, in some embodiments, the above communication unit may be a communication interface or a transceiver, or an input/output interface of a communication chip or a system-on-chip. The above processing unit may be one or more processors.

It can be appreciated that the device 500 according to the embodiment of the present disclosure may correspond to the third device in the method embodiment of the present disclosure, and the above and other operations and/or functions of the respective units in the device 500 are provided for the purpose of implementing the process flow corresponding to the third device in the method 20 shown in FIG. 5, and details thereof will be not omitted here for brevity.

FIG. 32 is a schematic block diagram of a sensing initiator 1000 according to an embodiment of the present disclosure. As shown in FIG. 32, the sensing initiator 1000 includes:
a communication unit 1010 configured to transmit second information to a sensing responder, the second information being used to establish at least one sensing session.

In some embodiments, the second information may include at least one of:
an order of the at least one sensing session;
sensing band information of the at least one sensing session;
time information of the at least one sensing session;
sensing role information in each of the at least one sensing session;
a measurement feedback type of the at least one sensing session;
sensing channel information for sensing measurement of the at least one sensing session; and
fourth indication information indicating whether to confirm third information that is response information to the second information.

In some embodiments, the order of the at least one sensing session may indicate a priority order of the at least one sensing session.

In some embodiments, the time information of the at least one sensing session may include the start time and the duration, the start time and the duration corresponding to each of the at least one sensing session.

In some embodiments, the measurement feedback type of the at least one sensing session may include at least one of:
compressed Channel State Information (CSI), range-Doppler map, and range-time map corresponding to the at least one sensing session.

In some embodiments, the sensing channel information comprises at least one of:
a serial number of a sensing channel and a channel bandwidth of the sensing channel.

In some embodiments, the device 1000 may further include:
a processing unit configured to determine content indicated by the fourth indication information according to the sensing role information in each of the at least one sensing session.

In some embodiments, the processing unit may be further configured to:
determine that the fourth indication information indicates not to confirm the third information when the sensing initiator is an only sensing transmitter in the at least one sensing session;
determine that the fourth indication information indicates not to confirm the third information when the sensing initiator is an only sensing receiver in the at least one sensing session;
determine that the fourth indication information indicates to confirm the third information when the sensing initiator is not an only sensing transmitter in the at least one sensing session; or
determine that the fourth indication information indicates to confirm the third information when the sensing initiator is not an only sensing receiver in the at least one sensing session.

In some embodiments, the second information may be carried in a sensing request frame, or the second information may be carried in an association request frame.

In some embodiments, the communication unit 1010 may be further configured to: transmit the second information by means of multicast.

In some embodiments, the communication unit 1010 may be further configured to: receive the third information returned by the sensing responder based on a poll frame.

In some embodiments, the communication unit 1010 may be further configured to: receive the third information returned by the sensing responder based on a trigger frame.

In some embodiments, the communication unit 1010 may be further configured to: receive the third information returned by the sensing responder in a first order, the first order indicating an order in which the sensing responder returns the third information.

In some embodiments, the first order may be indicated by the sensing initiator.

In some embodiments, the first order and the second information may be transmitted in a same frame.

In some embodiments, the communication unit 1010 may be further configured to: transmit the second information to each sensing responder by means of unicast.

In some embodiments, the third information may include at least one of:
an order of the at least one sensing session; and
sensing status information of the at least one sensing session, indicating whether the sensing responder agrees to establish the sensing session.

In some embodiments, the sensing status information of the at least one sensing session may include one piece of sensing status information indicating whether the sensing responder agrees to establish the at least one sensing session; or
the sensing status information of the at least one sensing session may include at least one piece of sensing status information each corresponding to one sensing session, and each piece of sensing status information may indicate whether the sensing responder agrees to establish the corresponding sensing session.

In some embodiments, the third information may be carried in a sensing response frame, or the third information may be carried in an association response frame.

In some embodiments, the communication unit 1010 may be further configured to: transmit fourth information to the sensing responder, the fourth information being confirm information for the third information.

In some embodiments, the fourth information may include at least one of:
an order of the at least one sensing session;
sensing status information corresponding to the at least one sensing session; and
session establishment related information of a target sensing session the sensing responder agrees to establish.

In some embodiments, the session establishment related information of the target sensing session may include at least one of:
sensing frequency band information of the target sensing session;
time information of the target sensing session;
sensing role information in each sensing session of the target sensing session;
a measurement feedback type of the target sensing session; and
sensing channel information for sensing measurement of the target sensing session.

In some embodiments, the communication unit 1010 may be further configured to: transmit the fourth information to all sensing responders.

In some embodiments, the communication unit 1010 may be further configured to:
transmit the fourth information to at least one first sensing responder, the at least one first sensing responder including a sensing responder associated with a sensing session rejected to be established.

In some embodiments, the fourth information may be carried in a sensing confirm frame.

In some embodiments, the communication unit 1010 may be further configured to:
obtain sensing capability information of the sensing responder on at least one frequency band, wherein the second information is determined according to the sensing capability information of the sensing responder on the at least one frequency band.

Optionally, in some embodiments, the above communication unit may be a communication interface or a transceiver, or an input/output interface of a communication chip or a system-on-chip. The above processing unit may be one or more processors.

It can be appreciated that the device 1000 according to the embodiment of the present disclosure may correspond to the sensing initiator in the method embodiment of the present disclosure, and the above and other operations and/or functions of the respective units in the device 1000 are provided for the purpose of implementing the process flow corresponding to the sensing initiator in the method 30 shown in FIG. 17, and details thereof will be not omitted here for brevity.

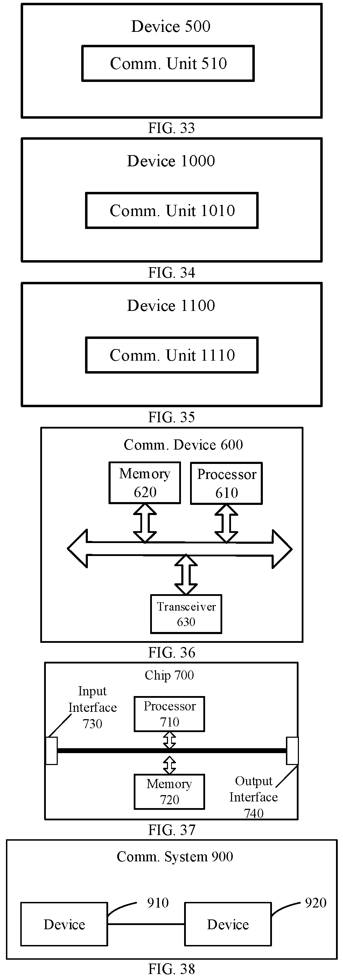

FIG. 33 is a schematic block diagram of a sensing responder 1100 according to an embodiment of the present disclosure. As shown in FIG. 33, the sensing responder 1100 includes:
a communication unit 1110 configured to receive second information transmitted by a sensing initiator, the second information being used to establish at least one sensing session.

In some embodiments, the second information may include at least one of:
an order of the at least one sensing session;
sensing band information of the at least one sensing session;
time information of the at least one sensing session;
sensing role information in each of the at least one sensing session;
a measurement feedback type of the at least one sensing session;
sensing channel information for sensing measurement of the at least one sensing session; and
fourth indication information indicating whether to confirm third information, which is response information to the second information.

In some embodiments, the order of the at least one sensing session may indicate a priority order of the at least one sensing session.

In some embodiments, the time information of the at least one sensing session may include the start time and the duration, the start time and the duration corresponding to each of the at least one sensing session.

In some embodiments, the measurement feedback type of the at least one sensing session may include at least one of:
compressed Channel State Information (CSI), range-Doppler map, and range-time map corresponding to the at least one sensing session.

In some embodiments, the sensing channel information may include at least one of:
a serial number of a sensing channel and a channel bandwidth of the sensing channel.

In some embodiments, the fourth indication information may indicate not to confirm the third information when the sensing initiator is an only sensing transmitter in the at least one sensing session;
the fourth indication information may indicate not to confirm the third information when the sensing initiator is an only sensing receiver in the at least one sensing session;
the fourth indication information may indicate to confirm the third information when the sensing initiator is not an only sensing transmitter in the at least one sensing session; or
the fourth indication information may indicate to confirm the third information when the sensing initiator is not an only sensing receiver in the at least one sensing session.

In some embodiments, the second information may be carried in a sensing request frame, or the second information may be carried in an association request frame.

In some embodiments, the second information may be transmitted by the sensing initiator by means of multicast, and the communication unit 1110 may be further configured to: return the third information to the sensing initiator based on a poll frame;
return the third information to the sensing initiator based on a trigger frame; or
return the third information to the sensing initiator in a first order, the first order indicating an order in which the sensing responder returns the third information.

In some embodiments, the first order may be indicated by the sensing initiator.

In some embodiments, the first order and the second information may be transmitted in a same frame.

In some embodiments, the third information may include at least one of:
an order of the at least one sensing session; and
sensing status information of the at least one sensing session, indicating whether the sensing responder agrees to establish the sensing session.

In some embodiments, the sensing status information of the at least one sensing session may include one piece of sensing status information indicating whether the sensing responder agrees to establish the at least one sensing session; or
the sensing status information of the at least one sensing session may include at least one piece of sensing status information each corresponding to one sensing session, and each piece of sensing status information may indicate whether the sensing responder agrees to establish the corresponding sensing session.

In some embodiments, the third information may be carried in a sensing response frame, or the third information may be carried in an association response frame.

In some embodiments, the communication unit 1110 may be further configured to: receive fourth information transmitted by the sensing initiator, fourth information being confirm information for the third information.

In some embodiments, the fourth information may include at least one of:
an order of the at least one sensing session;
sensing status information corresponding to the at least one sensing session; and
session establishment related information of a target sensing session the sensing responder agrees to establish.

In some embodiments, the session establishment related information of the target sensing session may include at least one of:
sensing frequency band information of the target sensing session;
time information of the target sensing session;
sensing role information in each sensing session of the target sensing session;
a measurement feedback type of the target sensing session; and
sensing channel information for sensing measurement of the target sensing session.

In some embodiments, the fourth information may be carried in a sensing confirm frame.

In some embodiments, the communication unit 1110 may be further configured to:
transmit sensing capability information of the sensing responder on at least one frequency band to the sensing initiator, wherein the second information is determined according to the sensing capability information of the sensing responder on the at least one frequency band.

Optionally, in some embodiments, the above communication unit may be a communication interface or a transceiver, or an input/output interface of a communication chip or a system-on-chip. The above processing unit may be one or more processors.

It can be appreciated that the device 1100 according to the embodiment of the present disclosure may correspond to the sensing responder in the method embodiment of the present disclosure, and the above and other operations and/or functions of the respective units in the device 1100 are provided for the purpose of implementing the process flow corresponding to the sensing responder in the method 30 shown in FIG. 17, and details thereof will be not omitted here for brevity.

FIG. 34 is a schematic diagram showing a structure of a communication device 600 according to an embodiment of the present disclosure. The communication device 600 shown in FIG. 34 includes a processor 610, and the processor 610 can invoke and execute a computer program from a memory to implement the method in the embodiment of the present disclosure.

Optionally, as shown in FIG. 34, the communication device 600 may further include a memory 620. The processor 610 can invoke and execute a computer program from the memory 620 to implement the method in the embodiment of the present disclosure.

The memory 620 may be a separate device independent from the processor 610, or may be integrated in the processor 610.

Optionally, as shown in FIG. 34, the communication device 600 may further include a transceiver 630, and the processor 610 may control the transceiver 630 to communicate with other devices, and in particular, transmit information or data to other devices, or receive information or data transmitted by other devices.

Here, the transceiver 630 may include a transmitter and a receiver. The transceiver 630 may further include one or more antennas.

Optionally, the communication device 600 may specifically be the first device according to the embodiment of the present disclosure, and the communication device 600 may implement the corresponding processes implemented by the first device in any of the methods according to the embodiments of the present disclosure. For the sake of brevity, details thereof will be omitted here.

Optionally, the communication device 600 may specifically be the third device according to the embodiment of the present disclosure, and the communication device 600 may implement the corresponding processes implemented by the third device in any of the methods according to the embodiments of the present disclosure. For the sake of brevity, details thereof will be omitted here.

Optionally, the communication device 600 may specifically be the sensing initiator according to the embodiment of the present disclosure, and the communication device 600 may implement the corresponding processes implemented by the sensing initiator in any of the methods according to the embodiments of the present disclosure. For the sake of brevity, details thereof will be omitted here.

Optionally, the communication device 600 may specifically be the sensing responder according to the embodiment of the present disclosure, and the communication device 600 may implement the corresponding processes implemented by the sensing responder in any of the methods according to the embodiments of the present disclosure. For the sake of brevity, details thereof will be omitted here.

FIG. 35 is a schematic diagram showing a structure of a chip according to an embodiment of the present disclosure. The chip 700 shown in FIG. 35 includes a processor 710, and the processor 710 can invoke and execute a computer program from a memory to implement the method in the embodiment of the present disclosure.

Optionally, as shown in FIG. 35, the chip 700 may further include a memory 720. The processor 710 can invoke and execute a computer program from the memory 720 to implement the method in the embodiment of the present disclosure.

The memory 720 may be a separate device independent from the processor 710, or may be integrated in the processor 710.

Optionally, the chip 700 may further include an input interface 730. The processor 610 can control the input interface 730 to communicate with other devices or chips, and in particular, obtain information or data transmitted by other devices or chips.

Optionally, the chip 700 may further include an output interface 740. The processor 710 can control the output interface 740 to communicate with other devices or chips, and in particular, output information or data to other devices or chips.

Optionally, the chip can be applied to the first device or third device in the embodiment of the present disclosure, and the chip can implement the corresponding processes implemented by the first device or third device in the various methods of the embodiments of the present disclosure. For the sake of brevity, details thereof will be omitted here.

Optionally, the chip can be applied to the sensing initiator or sensing responder in the embodiment of the present disclosure, and the chip can implement the corresponding processes implemented by the sensing initiator or sensing responder in the various methods of the embodiments of the present disclosure. For the sake of brevity, details thereof will be omitted here.

It can be appreciated that the chip in the embodiment of the present disclosure may also be referred to as a system-level chip, a system-chip, a chip system, or a system-on-chip.

FIG. 36 is a schematic block diagram showing a communication system 900 according to an embodiment of the present disclosure. As shown in FIG. 35, the communication system 900 includes a device 910 and a device 920.

Here, the device 910 can be configured to implement the corresponding functions implemented by the first device in the above method, and the device 920 can be configured to implement the corresponding functions implemented by the third device in the above method. For the sake of brevity, details thereof will be omitted here.

Here, the device 910 can be configured to implement the corresponding functions implemented by the sensing initiator in the above method, and the device 920 can be configured to implement the corresponding functions implemented by the sensing responder in the above method. For the sake of brevity, details thereof will be omitted here.

It is to be noted that the processor in the embodiment of the present disclosure may be an integrated circuit chip with signal processing capability. In an implementation, the steps of the above method embodiments can be implemented by hardware integrated logic circuits in a processor or instructions in the form of software. The processor can be a general purpose processor, a Digital Signal Processor (DSP), an Application Specific Integrated Circuit (ASIC), a Field Programmable Gate Array (FPGA) or another programmable logic device, a discrete gate or transistor logic device, or a discrete hardware component. The methods, steps, and logical block diagrams disclosed in the embodiments of the present disclosure can be implemented or performed. The general purpose processor may be a microprocessor or any conventional processor. The steps of the methods disclosed in the embodiments of the present disclosure may be directly embodied as being performed and completed by a hardware decoding processor, or by a combination of hardware and software modules in the decoding processor. The software modules can be located in a known storage medium in the related art, such as random access memory, flash memory, read-only memory, programmable read-only memory, electrically erasable programmable memory, or register. The storage medium can be located in the memory, and the processor can read information from the memory and perform the steps of the above methods in combination with its hardware.

It can be appreciated that the memory in the embodiments of the present disclosure may be a volatile memory or a non-volatile memory, or may include both volatile and non-volatile memories. Here, the non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which is used as an external cache. As illustrative, rather than limiting, examples, many forms of RAMs are available, including Static RAM (SRAM), Dynamic RAM (DRAM), Synchronous DRAM (SDRAM), Double Data Rate SDRAM (DDR SDRAM), Enhanced SDRAM (ESDRAM), Synch Link DRAM (SLDRAM ), and Direct Rambus RAM (DR RAM). It is to be noted that the memory used for the system and method described in the present disclosure is intended to include, but not limited to, these and any other suitable types of memories.

It can be appreciated that the above memories are exemplary only, rather than limiting the present disclosure. For example, the memory in the embodiment of the present disclosure may also be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch Link DRAM (SLDRAM), or a Direct Rambus RAM (DR RAM). That is, the memory in the embodiments of the present disclosure is intended to include, but not limited to, these and any other suitable types of memories.

An embodiment of the present disclosure also provides a computer readable storage medium for storing a computer program.

Optionally, the computer readable storage medium can be applied to the sensing initiator in the embodiment of the present disclosure, and the computer program can cause a computer to perform corresponding procedures implemented by the sensing initiator in the method according to any of the embodiments of the present disclosure. Details thereof will be omitted here for simplicity.

Optionally, the computer readable storage medium can be applied to the sensing responder in the embodiment of the present disclosure, and the computer program can cause a computer to perform corresponding procedures implemented by the sensing responder in the method according to any of the embodiments of the present disclosure. Details thereof will be omitted here for simplicity.

An embodiment of the present disclosure also provides a computer program product including computer program instructions.

Optionally, the computer program product can be applied to the sensing initiator in the embodiment of the present disclosure, and the computer program instructions can cause a computer to perform corresponding procedures implemented by the sensing initiator in the method according to any of the embodiments of the present disclosure. Details thereof will be omitted here for simplicity.

Optionally, the computer program product can be applied to the sensing responder in the embodiment of the present disclosure, and the computer program instructions can cause a computer to perform corresponding procedures implemented by the sensing responder in the method according to any of the embodiments of the present disclosure. Details thereof will be omitted here for simplicity.

An embodiment of the present disclosure also provides a computer program.

Optionally, the computer program can be applied to the sensing initiator in the embodiment of the present disclosure. The computer program, when executed on a computer, can cause the computer to perform corresponding procedures implemented by the sensing initiator in the method according to any of the embodiments of the present disclosure. Details thereof will be omitted here for simplicity.

Optionally, the computer program can be applied to the sensing responder in the embodiment of the present disclosure. The computer program, when executed on a computer, can cause the computer to perform corresponding procedures implemented by the sensing responder in the method according to any of the embodiments of the present disclosure. Details thereof will be omitted here for simplicity.

It can be appreciated by those skilled in the art that units and algorithm steps in the examples described in connection with the embodiments disclosed herein can be implemented in electronic hardware or any combination of computer software and electronic hardware. Whether these functions are executed by hardware or software depends on specific applications and design constraint conditions of the technical solutions. Those skilled in the art may use different methods for each specific application to implement the described functions, and such implementation is to be encompassed by the scope of this disclosure.

Those skilled in the art can clearly understand that, for the convenience and conciseness of the description, for the specific operation processes of the systems, devices, and units described above, reference can be made to the corresponding processes in the foregoing method embodiments, and details thereof will be omitted here.

In the embodiments of the present disclosure, it can be appreciated that the disclosed systems, devices, and methods may be implemented in other ways. For example, the device embodiments described above are illustrative only. For example, the divisions of the units are only divisions based on logical functions, and there may be other divisions in actual implementations. For example, more than one unit or component may be combined or integrated into another system, or some features can be ignored or omitted. In addition, the mutual coupling or direct coupling or communicative connection as shown or discussed may be indirect coupling or communicative connection between devices or units via some interfaces which may be electrical, mechanical, or in any other forms.

The units described as separate components may or may not be physically separated, and the components shown as units may or may not be physical units, that is, they may be co-located or distributed across a number of network elements. Some or all of the units may be selected according to actual needs to achieve the objects of the solutions of the embodiments.

In addition, the functional units in the embodiments of the present disclosure may be integrated into one processing unit, or alternatively be separate physical modules, or two or more units may be integrated into one unit.

When the function is implemented in the form of a software functional unit and sold or used as a standalone product, it can be stored in a computer readable storage medium. Based on this understanding, all or part of the technical solutions according to the embodiments of the present disclosure, or the part thereof that contributes to the prior art, can be embodied in the form of a software product. The computer software product may be stored in a storage medium and contain instructions to enable a computer device, such as a personal computer, a server, or a network device, etc., to perform all or part of the steps of the method described in each of the embodiments of the present disclosure. The storage medium may include a Universal Serial Bus flash drive, a mobile hard disk, a Read-Only Memory (ROM), a Random Access Memory (RAM), a magnetic disk, an optical disc, or any other medium capable of storing program codes.

While the specific embodiments of the present disclosure have been described above, the scope of the present disclosure is not limited to these embodiments. Various variants and alternatives can be made by those skilled in the art without departing from the scope of the present disclosure. These variants and alternatives are to be encompassed by the scope of the present disclosure as defined by the claims as attached.

The present disclosure provides a wireless communication method and device, capable of expediting a sensing discovery and set process and improving the performance of sensing capability discovery and set.

In a first clause, provided is a wireless communication method, which includes:
transmitting, by a first device, first information on a first frequency band, the first information including sensing capability information of a target device on at least one frequency band.

In a second clause, according to the method of the first clause, where the first information includes sensing capability information of the first device on a plurality of frequency bands.

In a third clause, according to the method of the second clause, where the sensing capability information of the first device on the plurality of frequency bands includes at least one of:
first indication information indicating whether the first device has a sensing capability on the plurality of frequency bands;
sensing frequency band information supported by the first device;
sensing role information supported by the first device;
sensing type information supported by the first device;
whether the first device supports sensing between devices of a same type;
whether the first device supports sensing between one device and a plurality of devices;
whether the first device supports sensing between a plurality of devices and a plurality of devices;
whether the first device supports trigger-based sensing;
whether the first device supports pairwise sensing; and
whether the first device supports Wireless Fidelity (WiFi) sensing.

In a fourth clause, according to the method of the third clause, where the sensing role information supported by the first device includes a set of sensing role information corresponding to each sensing frequency band supported by the first device; or
the sensing role information supported by the first device includes sensing role information supported by the first device on each supported sensing frequency band.

In a fifth clause, according to the method of the third clause or the fourth clause, where the sensing type information supported by the first device includes a set of sensing type information corresponding to each sensing frequency band supported by the first device;
the sensing type information supported by the first device includes sensing type information supported by the first device on each supported sensing frequency band; or
the sensing type information supported by the first device includes sensing type information supported by the first device on a part of supported sensing frequency bands.

In a sixth clause, according to the method of any one of the second clause to the fifth clause, where the first device is an Access Point (AP), and the sensing capability information of the first device on the plurality of frequency bands is transmitted via at least one of:
a beacon frame, a probe response frame, and an association response frame.

In a seventh clause, according to the method of any one of the second clause to the fifth clause, where the first device is a Station (STA), and the sensing capability information of the first device on the plurality of frequency bands is transmitted via at least one of:
a probe request frame and an association request frame.

In an eighth clause, according to the method of any one of the second clause to the seventh clause, where the sensing capability information of the first device on the plurality of frequency bands is carried by a Sensing Capabilities element in a first frame and/or an Extended Capabilities element in a second frame.

In a ninth clause, according to the method of the seventh clause, where whether the first device supports WIFI sensing is determined according to whether a first frame includes a Sensing Capabilities element, and when the first device supports WIFI sensing, other sensing capability information of the first device on the plurality of frequency bands is carried by the Sensing Capabilities element in the first frame;
whether the first device supports WIFI sensing is determined according to a first subfield of an Extended Capabilities element in a second frame, and when the first device supports WIFI sensing, other sensing capability information of the first device on the plurality of frequency bands is carried by one or more other subfields of the Extended Capabilities element in the second frame; or
whether the first device supports WIFI sensing is determined according to the first subfield of the Extended Capabilities element in the second frame, and when the first device supports WIFI sensing, other sensing capability information of the first device on the plurality of frequency bands is carried by the Sensing Capabilities element in the first frame.

In a tenth clause, according to the method of the eighth clause or the ninth clause, where the first frame and the second frame are same, or the first frame and the second frame are different.

In an eleventh clause, according to the method of any one of the first clause to the tenth clause, where the first information includes sensing capability information of at least one second device on at least one frequency band.

In a twelfth clause, according to the method of the eleventh clause, where the first device is a first AP, and the at least one second device includes at least one second AP neighboring to the first AP.

In a thirteenth clause, according to the method of the eleventh clause or the twelfth clause, where the sensing capability information of the at least one second device on the at least one frequency band includes at least one of:
second indication information indicating whether the at least one second device has a sensing capability on a plurality of frequency bands;
sensing frequency band information supported by each second device;
sensing role information supported by each second device;
sensing type information supported by each second device;
whether each second device supports sensing between devices of a same type;
whether each second device supports sensing between one device and a plurality of devices;
whether each second device supports sensing between a plurality of devices and a plurality of devices;
whether each second device supports trigger-based sensing;
whether each second device supports pairwise sensing; and
whether each second device supports WIFI sensing.

In a fourteenth clause, according to the method of the thirteenth clause, where the sensing role information supported by each second device includes a set of sensing role information corresponding to each sensing frequency band supported by each second device; or
the sensing role information supported by each second device includes sensing role information supported by each second device on each supported sensing frequency band.

In a fifteenth clause, according to the method of the thirteenth clause or the fourteenth clause, where the sensing type information supported by each second device includes a set of sensing type information corresponding to each sensing frequency band supported by each second device; or
the sensing type information supported by each second device includes sensing type information supported by each second device on each supported sensing frequency band.

In a sixteenth clause, according to the method of any one of the eleventh clause to the fifteenth clause, where the first device is an AP, and the sensing capability information of the at least one second device on the at least one frequency band is transmitted via at least one of:
a beacon frame and a probe response frame.

In a seventeenth clause, according to the method of the sixteenth clause, where the sensing capability information of the at least one second device on the at least one frequency band is carried in a Target Beacon Transmission Time (TBTT) information set field in a Reduced Neighbor Report (RNR) element of the beacon frame and/or the probe response frame.

In an eighteenth clause, according to the method of any one of the first clause to the seventeenth clause, where the first information includes sensing capability information of a nontransmitted Basic Service Set (BSS) of the first device on at least one frequency band.

In a nineteenth clause, according to the method of the eighteenth clause, where the sensing capability information of the nontransmitted BSS of the first device on the at least one frequency band includes at least one of:
third indication information indicating whether the nontransmitted BSS of the first device has a sensing capability on a plurality of frequency bands;
sensing frequency band information supported by the nontransmitted BSS of the first device;
sensing role information supported by the nontransmitted BSS of the first device; and sensing type information supported by the nontransmitted BSS of the first device.

In a twentieth clause, according to the method of the nineteenth clause, where the sensing frequency band information supported by the nontransmitted BSS of the first device includes a set of sensing frequency band information corresponding to each nontransmitted BSS of the first device; or
the sensing frequency band information supported by the nontransmitted BSS of the first device includes sensing frequency band information correspondingly supported by each nontransmitted BSS of the first device.

In a twenty-first clause, according to the method of the nineteenth clause or the twentieth clause, where the sensing role information supported by the nontransmitted BSS of the first device includes a set of sensing role information corresponding to each nontransmitted BSS of the first device; or
the sensing role information supported by the nontransmitted BSS of the first device includes sensing role information supported by each nontransmitted BSS of the first device.

In a twenty-second clause, according to the method of any one of the nineteenth clause to the twenty-first clause, where the sensing type information supported by the nontransmitted BSS of the first device includes a set of sensing type information corresponding to each nontransmitted BSS of the first device; or
the sensing type information supported by the nontransmitted BSS of the first device includes sensing type information supported by each nontransmitted BSS of the first device.

In a twenty-third clause, according to the method of any one of the nineteenth clause to the twenty-second clause, where the sensing role information supported by the nontransmitted BSS of the first device includes sensing role information supported by the nontransmitted BSS of the first device on each supported sensing frequency band.

In a twenty-fourth clause, according to the method of any one of the nineteenth clause to the twenty-third clause, where the sensing type information supported by the nontransmitted BSS of the first device includes sensing type information supported by the nontransmitted BSS of the first device on each supported sensing frequency band.

In a twenty-fifth clause, according to the method of any one of the nineteenth clause to the twenty-fourth clause, where the sensing capability information of the nontransmitted BSS of the first device on the at least one frequency band is transmitted via at least one of:
a beacon frame and a probe response frame.

In a twenty-sixth clause, according to the method of the twenty-fifth clause, where the sensing capability information of the nontransmitted BSS of the first device on the at least one frequency band is carried in a transmitted Basic Service Set Identifier (BSSID) element in a multi-BSSID of the beacon frame and/or the probe response frame.

In a twenty-seventh clause, according to the method of any one of the first clause to the twenty-sixth clause, where the first device is a sensing initiator.

In a twenty-eighth clause, according to the method of any one of the first clause to the twenty-seventh clause, where the first frequency band is a low frequency band.

In a twenty-ninth clause, provided is a wireless communication method, which includes: receiving, by a third device, first information transmitted by a first device on a first frequency band, the first information including sensing capability information of a target device on at least one frequency band.

In a thirtieth clause, according to the method of the twenty-ninth clause, where the first information includes sensing capability information of the first device on a plurality of frequency bands.

In a thirty-first clause, according to the method of the thirtieth clause, where the sensing capability information of the first device on the plurality of frequency bands includes at least one of:
first indication information indicating whether the first device has a sensing capability on the plurality of frequency bands;
sensing frequency band information supported by the first device;
sensing role information supported by the first device;
sensing type information supported by the first device;
whether the first device supports sensing between devices of a same type;
whether the first device supports sensing between one device and a plurality of devices;
whether the first device supports sensing between a plurality of devices and a plurality of devices;

whether the first device supports trigger-based sensing;
whether the first device supports pairwise sensing; and
whether the first device supports Wireless Fidelity (WiFi) sensing.

In a thirty-second clause, according to the method of the thirty-first clause, where the sensing role information supported by the first device includes a set of sensing role information corresponding to each sensing frequency band supported by the first device; or
the sensing role information supported by the first device includes sensing role information supported by the first device on each supported sensing frequency band.

In a thirty-third clause, according to the method of the thirty-first clause or the thirty-second clause, where the sensing type information supported by the first device includes a set of sensing type information corresponding to each sensing frequency band supported by the first device;
the sensing type information supported by the first device includes sensing type information supported by the first device on each supported sensing frequency band; or
the sensing type information supported by the first device includes sensing type information supported by the first device on a part of supported sensing frequency bands.

In a thirty-fourth clause, according to the method of any one of the thirtieth clause to the thirty-third clause, where the first device is an Access Point (AP), the third device is a Station (STA), and the sensing capability information of the first device on the plurality of frequency bands is transmitted via at least one of:
a beacon frame, a probe response frame, and an association response frame.

In a thirty-fifth clause, according to the method of any one of the thirtieth clause to the thirty-third clause, where the first device is a Station (STA), the third device is an Access Point (AP), and the sensing capability information of the first device on the plurality of frequency bands is transmitted via at least one of:
a probe request frame and an association request frame.

In a thirty-sixth clause, according to the method of any one of the twenty-ninth clause to the thirty-fifth clause, where the first information includes sensing capability information of at least one second device on at least one frequency band.

In a thirty-seventh clause, according to the method of the thirty-sixth clause, where the first device is a first AP, and the at least one second device includes at least one second AP neighboring to the first AP.

In a thirty-eight clause, according to the method of the thirty-sixth clause or the thirty-seventh clause, where the sensing capability information of the at least one second device on the at least one frequency band includes at least one of:
second indication information indicating whether the at least one second device has a sensing capability on a plurality of frequency bands;
sensing frequency band information supported by each second device;
sensing role information supported by each second device;
sensing type information supported by each second device;
whether each second device supports sensing between devices of a same type;
whether each second device supports sensing between one device and a plurality of devices;
whether each second device supports sensing between a plurality of devices and a plurality of devices;
whether each second device supports trigger-based sensing;
whether each second device supports pairwise sensing; and
whether each second device supports WIFI sensing.

In a thirty-ninth clause, according to the method of the thirty-eight clause, where the sensing role information supported by each second device includes a set of sensing role information corresponding to each sensing frequency band supported by each second device; or
the sensing role information supported by each second device includes sensing role information supported by each second device on each supported sensing frequency band.

In a fortieth clause, according to the method of the thirty-eight clause or the thirty-ninth clause, where the sensing type information supported by each second device includes a set of sensing type information corresponding to each sensing frequency band supported by each second device; or
the sensing type information supported by each second device includes sensing type information supported by each second device on each supported sensing frequency band.

In a forty-first clause, according to the method of any one of the thirty-sixth clause to the fortieth clause, where the first device is an AP, the third device is an STA, and the sensing capability information of the at least one second device on the at least one frequency band is transmitted via at least one of:
a beacon frame and a probe response frame.

In a forty-second clause, according to the method of the forty-first clause, where the sensing capability information of the at least one second device on the at least one frequency band is carried in a Target Beacon Transmission Time (TBTT) information set field in a Reduced Neighbor Report (RNR) element of the beacon frame and/or the probe response frame.

In a forty-third clause, according to the method of any one of the twenty-ninth clause to the forty-second clause, where the first information includes sensing capability information of a nontransmitted Basic Service Set (BSS) of the first device on at least one frequency band.

In a forty-fourth clause, according to the method of the forty-third clause, where the sensing capability information of the nontransmitted BSS of the first device on the at least one frequency band includes at least one of:
third indication information indicating whether the nontransmitted BSS of the first device has a sensing capability on a plurality of frequency bands;
sensing frequency band information supported by the nontransmitted BSS of the first device;
sensing role information supported by the nontransmitted BSS of the first device; and
sensing type information supported by the nontransmitted BSS of the first device.

In a forty-fifth clause, according to the method of the forty-fourth clause, where the sensing frequency band information supported by the nontransmitted BSS of the first device includes a set of sensing frequency band information corresponding to each nontransmitted BSS of the first device; or
the sensing frequency band information supported by the nontransmitted BSS of the first device includes sensing frequency band information correspondingly supported by each nontransmitted BSS of the first device.

In a forty-sixth clause, according to the method of the forty-fourth clause or the forty-fifth clause, where the sensing role information supported by the nontransmitted BSS of the first device includes a set of sensing role information corresponding to each nontransmitted BSS of the first device; or
the sensing role information supported by the nontransmitted BSS of the first device includes sensing role information supported by each nontransmitted BSS of the first device.

In a forty-seventh clause, according to the method of any one of the forty-fourth clause to the forty-sixth clause, where the sensing type information supported by the nontransmitted BSS of the first device includes a set of sensing type information corresponding to each nontransmitted BSS of the first device; or
the sensing type information supported by the nontransmitted BSS of the first device includes sensing type information supported by each nontransmitted BSS of the first device.

In a forty-eighth clause, according to the method of any one of the forty-fourth clause to the forty-seventh clause, where the sensing role information supported by the nontransmitted BSS of the first device includes sensing role information supported by the nontransmitted BSS of the first device on each supported sensing frequency band.

In a forty-ninth clause, according to the method of any one of the forty-fourth clause to the forty-eighth clause, where the sensing type information supported by the nontransmitted BSS of the first device includes sensing type information supported by the nontransmitted BSS of the first device on each supported sensing frequency band.

In a fiftieth clause, according to the method of any one of the forty-fourth clause to the forty-ninth clause, where the sensing capability information of the nontransmitted BSS of the first device on the at least one frequency band is transmitted via at least one of:
a beacon frame and a probe response frame.

In a fifty-first clause, according to the method of the fiftieth clause, where the sensing capability information of the nontransmitted BSS of the first device on the at least one frequency band is carried in a transmitted Basic Service Set Identifier (BSSID) element in a multi-BSSID of the beacon frame and/or the probe response frame.

In a fifty-second clause, according to the method of any one of the twenty-ninth clause to the fifty-first clause, where the first device is a sensing initiator.

In a fifty-third clause, according to the method of any one of the twenty-ninth clause to the fifty-second clause, where the first frequency band is a low frequency band.

In a fifty-fourth clause, provided is a wireless communication method, which includes:
transmitting, by a sensing initiator, second information to a sensing responder, the second information being used to establish at least one sensing session.

In a fifty-fifth clause, according to the method of the fifty-fourth clause, where the second information includes at least one of:
an order of the at least one sensing session;
sensing band information of the at least one sensing session;
time information of the at least one sensing session;
sensing role information in each of the at least one sensing session;
a measurement feedback type of the at least one sensing session;
sensing channel information for sensing measurement of the at least one sensing session; and
fourth indication information indicating whether to confirm third information that is response information to the second information.

In a fifty-sixth clause, according to the method of the fifty-fifth clause, where the order of the at least one sensing session indicates a priority order of the at least one sensing session.

In a fifty-seventh clause, according to the method of the fifty-fifth clause or the fifty-sixth clause, where the time information of the at least one sensing session includes a start time and a duration corresponding to each of the at least one sensing session.

In a fifty-eight clause, according to the method of any one of the fifty-fifth clause to the fifty-seventh clause, where the measurement feedback type of the at least one sensing session includes at least one of:
compressed Channel State Information (CSI), range-Doppler map, and range-time map corresponding to each of the at least one sensing session.

In a fifty-ninth clause, according to the method of any one of the fifty-fifth clause to the fifty-eight clause, where the sensing channel information includes at least one of:
a serial number of a sensing channel and a channel bandwidth of the sensing channel.

In a sixtieth clause, according to the method of any one of the fifty-fifth clause to the fifty-ninth clause, the method further includes:
determining content indicated by the fourth indication information according to the sensing role information in each of the at least one sensing session.

In a sixty-first clause, according to the method of the sixtieth clause, where said determining the content indicated by the fourth indication information according to the sensing role information in each of the at least one sensing session includes:
determining that the fourth indication information indicates not to confirm the third information when the sensing initiator is an only sensing transmitter in the at least one sensing session;
determining that the fourth indication information indicates not to confirm the third information when the sensing initiator is an only sensing receiver in the at least one sensing session;
determining that the fourth indication information indicates to confirm the third information when the sensing initiator is not an only sensing transmitter in the at least one sensing session; or
determining that the fourth indication information indicates to confirm the third information when the sensing initiator is not an only sensing receiver in the at least one sensing session.

In a sixty-second clause, according to the method of any one of the fifty-fifth clause to the sixty-first clause, where the second information is carried in a sensing request frame, or the second information is carried in an association request frame.

In a sixty-third clause, according to the method of any one of the fifty-fifth clause to the sixty-second clause, where said transmitting, by the sensing initiator, the second information to the sensing responder includes:
transmitting, by the sensing initiator, the second information by means of multicast.

In a sixty-fourth clause, according to the method of the sixty-third clause, the method further includes:
receiving, by the sensing initiator, the third information returned by the sensing responder based on a poll frame.

In a sixty-fifth clause, according to the method of the sixty-third clause, the method further includes:
receiving, by the sensing initiator, the third information returned by the sensing responder based on a trigger frame.

In a sixty-sixth clause, according to the method of the sixty-third clause, the method further includes:
receiving, by the sensing initiator, the third information returned by the sensing responder in a first order, the first order indicating an order in which the sensing responder returns the third information.

In a sixty-seventh clause, according to the method of the sixty-sixth clause, where the first order is indicated by the sensing initiator.

In a sixty-eighth clause, according to the method of the sixty-seventh clause, where the first order and the second information are transmitted in a same frame.

In a sixty-ninth clause, according to the method of any one of the fifty-fourth clause to the sixty-second clause, where said transmitting, by the sensing initiator, the second information to the sensing responder includes:
transmitting, by the sensing initiator, the second information to each sensing responder by means of unicast.

In a seventieth clause, according to the method of any one of the fifty-fifth clause to the sixty-ninth clause, where the third information includes at least one of:
an order of the at least one sensing session; and
sensing status information of the at least one sensing session, indicating whether the sensing responder agrees to establish the sensing session.

In a seventy-first clause, according to the method of the seventieth clause, where the sensing status information of the at least one sensing session includes one piece of sensing status information indicating whether the sensing responder agrees to establish the at least one sensing session; or
the sensing status information of the at least one sensing session includes at least one piece of sensing status information each corresponding to one sensing session, and each piece of sensing status information indicates whether the sensing responder agrees to establish the corresponding sensing session.

In a seventy-second clause, according to the method of any one of the fifty-fifth clause to the seventy-first clause, where the third information is carried in a sensing response frame, or the third information is carried in an association response frame.

In a seventy-third clause, according to the method of any one of the fifty-fifth clause to the seventy-second clause, the method further includes:
transmitting, by the sensing initiator, fourth information to the sensing responder, the fourth information being confirm information for the third information.

In a seventy-fourth clause, according to the method of the seventy-third clause, where the fourth information includes at least one of:
an order of the at least one sensing session;
sensing status information corresponding to the at least one sensing session; and
session establishment related information of a target sensing session the sensing responder agrees to establish.

In a seventy-fifth clause, according to the method of the seventy-fourth clause, where the session establishment related information of the target sensing session includes at least one of:
sensing frequency band information of the target sensing session;
time information of the target sensing session;
sensing role information in each sensing session of the target sensing session;
a measurement feedback type of the target sensing session; and
sensing channel information for sensing measurement of the target sensing session.

In a seventy-sixth clause, according to the method of any one of the seventy-third clause to the seventy-fifth clause, where said transmitting, by the sensing initiator, the fourth information to the sensing responder includes:
transmitting, by the sensing initiator, the fourth information to all sensing responders.

In a seventy-seventh clause, according to the method of any one of the seventy-third clause to the seventy-fifth clause, where said transmitting, by the sensing initiator, the fourth information to the sensing responder includes:
transmitting, by the sensing initiator, the fourth information to at least one first sensing responder, the at least one first sensing responder including a sensing responder associated with a sensing session rejected to be established.

In a seventy-eighth clause, according to the method of any one of the seventy-third clause to the seventy-seventh clause, where the fourth information is carried in a sensing confirm frame.

In a seventy-ninth clause, according to the method of any one of the fifty-fourth clause to the seventy-eighth clause, the method further includes:
obtaining, by the sensing initiator, sensing capability information of the sensing responder on at least one frequency band, where the second information is determined according to the sensing capability information of the sensing responder on the at least one frequency band.

In a eightieth clause, provided is a wireless communication method, which includes:
receiving, by a sensing responder, second information transmitted by a sensing initiator, the second information being used to establish at least one sensing session.

In an eighty-first clause, according to the method of the eightieth clause, where the second information includes at least one of:
an order of the at least one sensing session;
sensing band information of the at least one sensing session;
time information of the at least one sensing session;
sensing role information in each of the at least one sensing session;
a measurement feedback type of the at least one sensing session;
sensing channel information for sensing measurement of the at least one sensing session; and
fourth indication information indicating whether to confirm third information, which is response information to the second information.

In an eighty-second clause, according to the method of the eighty-first clause, where the order of the at least one sensing session indicates a priority order of the at least one sensing session.

In an eighty-third clause, according to the method of the eighty-first clause or the eighty-second clause, where the time information of the at least one sensing session includes a start time and a duration corresponding to each of the at least one sensing session.

In an eighty-fourth clause, according to the method of any one of the eighty-first clause to the eighty-third clause, where the measurement feedback type of the at least one sensing session includes at least one of:
compressed Channel State Information (CSI), range-Doppler map, and range-time map corresponding to each of the at least one sensing session.

In an eighty-fifth clause, according to the method of any one of the eighty-first clause to the eighty-fourth clause, where the sensing channel information includes at least one of:
a serial number of a sensing channel and a channel bandwidth of the sensing channel.

In an eighty-sixth clause, according to the method of any one of the eighty-first clause to the eighty-fifth clause, where the fourth indication information indicates not to confirm the third information when the sensing initiator is an only sensing transmitter in the at least one sensing session;
the fourth indication information indicates not to confirm the third information when the sensing initiator is an only sensing receiver in the at least one sensing session;
the fourth indication information indicates to confirm the third information when the sensing initiator is not an only sensing transmitter in the at least one sensing session; or
the fourth indication information indicates to confirm the third information when the sensing initiator is not an only sensing receiver in the at least one sensing session.

In an eighty-seventh clause, according to the method of any one of the eighty-first clause to the eighty-sixth clause, where the second information is carried in a sensing request frame, or the second information is carried in an association request frame.

In an eighty-eighth clause, according to the method of any one of the eighty-first clause to the eighty-seventh clause, where the second information is transmitted by the sensing initiator by means of multicast, and the method further includes:
returning, by the sensing responder, the third information to the sensing initiator based on a poll frame;
returning, by the sensing responder, the third information to the sensing initiator based on a trigger frame; or
returning, by the sensing responder, the third information to the sensing initiator in a first order, the first order indicating an order in which the sensing responder returns the third information.

In an eighty-ninth clause, according to the method of the eighty-eighth clause, where the first order is indicated by the sensing initiator.

In a ninetieth clause, according to the method of the eighty-eighth clause or the eighty-ninth clause, where the first order and the second information are transmitted in a same frame.

In a ninety-first clause, according to the method of any one of the eighty-first clause to the ninetieth clause, where the third information includes at least one of:
an order of the at least one sensing session; and
sensing status information of the at least one sensing session, indicating whether the sensing responder agrees to establish the sensing session.

In a ninety-second clause, according to the method of the ninety-first clause, where the sensing status information of the at least one sensing session includes one piece of sensing status information indicating whether the sensing responder agrees to establish the at least one sensing session; or
the sensing status information of the at least one sensing session includes at least one piece of sensing status information each corresponding to one sensing session, and each piece of sensing status information indicates whether the sensing responder agrees to establish the corresponding sensing session.

In a ninety-third clause, according to the method of any one of the eighty-first clause to the ninety-second clause, where the third information is carried in a sensing response frame, or the third information is carried in an association response frame.

In a ninety-fourth clause, according to the method of any one of the eighty-first clause to the ninety-second clause, the method further includes:
receiving, by the sensing responder, fourth information transmitted by the sensing initiator, fourth information being confirm information for the third information.

In a ninety-fifth clause, according to the method of the ninety-fourth clause, where the fourth information includes at least one of:
an order of the at least one sensing session;
sensing status information corresponding to the at least one sensing session; and
session establishment related information of a target sensing session the sensing responder agrees to establish.

In a ninety-sixth clause, according to the method of the ninety-fifth clause, where the session establishment related information of the target sensing session includes at least one of:
sensing frequency band information of the target sensing session;
time information of the target sensing session;
sensing role information in each sensing session of the target sensing session;
a measurement feedback type of the target sensing session; and
sensing channel information for sensing measurement of the target sensing session.

In a ninety-seventh clause, according to the method of any one of the ninety-fourth clause to the ninety-sixth clause, where the fourth information is carried in a sensing confirm frame.

In a ninety-eighth clause, according to the method of any one of the eightieth clause to the ninety-seventh clause, the method further includes:
transmitting, by the sensing responder, sensing capability information of the sensing responder on at least one frequency band to the sensing initiator, where the second information is determined according to the sensing capability information of the sensing responder on the at least one frequency band.

In a ninety-ninth clause, provided is a wireless communication device, which includes:
a communication unit configured to transmit first information on a first frequency band, the first information including sensing capability information of a target device on at least one frequency band.

In a hundredth clause, provided is a wireless communication device, which includes:
a communication unit configured to receive first information transmitted by a first device on a first frequency band, the first information including sensing capability information of a target device on at least one frequency band.

In one hundred and first clause, provided is a sensing initiator, which includes:
a communication unit configured to transmit second information to a sensing responder, the second information being used to establish at least one sensing session.

In one hundred and second clause, provided is a sensing responder, which includes:
a communication unit configured to receive second information transmitted by a sensing initiator, the second information being used to establish at least one sensing session.

In one hundred and third clause, provided is a wireless communication device, which includes a processor and a memory, where the memory has a computer program stored thereon, and the processor is configured to invoke and execute the computer program stored in the memory to perform the method of any one of the first clause to the twenty-eighth clause.

In one hundred and fourth clause, provided is a wireless communication device, which includes a processor and a memory, where the memory has a computer program stored thereon, and the processor is configured to invoke and execute the computer program stored in the memory to perform the method according to any one of the twenty-ninth clause to the fifty-three clause.

In one hundred and fifth clause, provided is a sensing initiator, which includes a processor and a memory, where the memory is configured to store a computer program, and the processor is configured to invoke and execute the computer program stored in the memory to perform the method according to any one of the fifty-fourth clause to the seventy-ninth clause.

In one hundred and sixth clause, provided is a sensing responder, which includes a processor and a memory, where the memory is configured to store a computer program, and the processor is configured to invoke and execute the computer program stored in the memory to perform the method according to any one of the eightieth clause to the ninety-eighth clause.

In one hundred and seventh clause, provided is a chip, which includes a processor configured to invoke and execute a computer program from a memory, to enable a device provided with the chip to perform the method according to any one of the first clause to the twenty-eighth clause, any one of the twenty-ninth clause to the fifty-three clause, any one of the fifty-fourth clause to the seventy-ninth clause, or any one of the eightieth clause to the ninety-eighth clause.

In one hundred and eighth clause, provided is a computer-readable storage medium, configured to store a computer program that enables a computer to perform the method according to any one of the first clause to the twenty-eighth clause, any one of the twenty-ninth clause to the fifty-three clause, any one of the fifty-fourth clause to the seventy-ninth clause, or any one of the eightieth clause to the ninety-eighth clause.

In one hundred and ninth clause, provided is a computer program product, which includes computer program instructions that cause a computer to perform the method according to any one of the first clause to the twenty-eighth clause, any one of the twenty-ninth clause to the fifty-three clause, any one of the fifty-fourth clause to the seventy-ninth clause, or any one of the eightieth clause to the ninety-eighth clause.

In one hundred and tenth clause, provided is a computer program, causing a computer to perform the method according to any one of the first clause to the twenty-eighth clause, any one of the twenty-ninth clause to the fifty-three clause, any one of the fifty-fourth clause to the seventy-ninth clause, or any one of the eightieth clause to the ninety-eighth clause.

## Claims

1. A wireless communication method, **characterized by** comprising:
receiving, by a third device, first information transmitted by a first device on a first frequency band, the first information comprising sensing capability information of a target device on at least one frequency band.

2. The method according to claim 1, wherein the sensing capability information of the nontransmitted Basic Service Set, BSS, of the first device on the at least one frequency band is carried in a transmitted Basic Service Set Identifier, BSSID, element in a multi-BSSID of the beacon frame and/or the probe response frame; wherein the first device is a sensing initiator.

3. A wireless communication method, **characterized by** comprising:
transmitting, by a sensing initiator, second information to a sensing responder, the second information being used to establish at least one sensing session.

4. The method according to claim 3, wherein the second information comprises at least one of:
an order of the at least one sensing session;
sensing band information of the at least one sensing session;
time information of the at least one sensing session;
sensing role information in each of the at least one sensing session;
a measurement feedback type of the at least one sensing session;
sensing channel information for sensing measurement of the at least one sensing session; and
fourth indication information indicating whether to confirm third information that is response information to the second information.

5. The method according to claim 4, wherein the order of the at least one sensing session indicates a priority order of the at least one sensing session.

6. The method according to claim 4 or 5, wherein the sensing channel information comprises at least one of:
a serial number of a sensing channel and a channel bandwidth of the sensing channel.

7. The method according to claim 4 or 5, wherein said transmitting, by the sensing initiator, the second information to the sensing responder comprises:
transmitting, by the sensing initiator, the second information by means of multicast.

8. The method according to claim 7, further comprising:
receiving, by the sensing initiator, the third information returned by the sensing responder in a first order, the first order indicating an order in which the sensing responder returns the third information.

9. The method according to claim 8, wherein the first order is indicated by the sensing initiator; or
the first order and the second information are transmitted in a same frame.

10. The method according to any one of claims 3-6, wherein said transmitting, by the sensing initiator, the second information to the sensing responder comprises:
transmitting, by the sensing initiator, the second information to each sensing responder by means of unicast.

11. A wireless communication device (500), **characterized by** comprising:
a communication unit (510) configured to receive first information transmitted by a first device on a first frequency band, the first information comprising sensing capability information of a target device on at least one frequency band.

12. The wireless communication device (500) according to claim 11, wherein the sensing capability information of the nontransmitted Basic Service Set, BSS, of the first device on the at least one frequency band is carried in a transmitted Basic Service Set Identifier, BSSID, element in a multi-BSSID of the beacon frame and/or the probe response frame; wherein the first device is a sensing initiator.

13. A sensing initiator (1000), **characterized by** comprising:
a communication unit (1010) configured to transmit second information to a sensing responder, the second information being used to establish at least one sensing session.

14. The sensing initiator (1000) according to claim 13, wherein the second information comprises at least one of:
an order of the at least one sensing session;
sensing band information of the at least one sensing session;
time information of the at least one sensing session;
sensing role information in each of the at least one sensing session;
a measurement feedback type of the at least one sensing session;
sensing channel information for sensing measurement of the at least one sensing session; and
fourth indication information indicating whether to confirm third information that is response information to the second information.

15. The sensing initiator (1000) according to claim 14, wherein the order of the at least one sensing session indicates a priority order of the at least one sensing session.
